(19) Europäisches Patentamt
European Patent Office
Office européen des brevets

(11) EP 3 373 059 A1

(12) **EUROPEAN PATENT APPLICATION**
published in accordance with Art. 153(4) EPC

(43) Date of publication:
**12.09.2018 Bulletin 2018/37**

(21) Application number: **17774122.0**

(22) Date of filing: **08.03.2017**

(51) Int Cl.:
***G02B 17/08*** *(2006.01)* ***G02B 13/16*** *(2006.01)*
***G02B 13/18*** *(2006.01)*

(86) International application number:
**PCT/JP2017/009130**

(87) International publication number:
**WO 2017/169577 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016068511**

(71) Applicant: **Panasonic Intellectual Property Management Co., Ltd.**
**Osaka-shi, Osaka 540-6207 (JP)**

(72) Inventors:
- **UCHIDA, Tsuneo**
  **Osaka-shi, Osaka 540-6207 (JP)**
- **YAMADA, Katsu**
  **Osaka-shi, Osaka 540-6207 (JP)**

(74) Representative: **Eisenführ Speiser Patentanwälte Rechtsanwälte PartGmbB**
**Postfach 10 60 78**
**28060 Bremen (DE)**

(54) **PROJECTION OPTICAL SYSTEM AND IMAGE PROJECTION DEVICE**

(57) Projection optical system (100) that magnifies and projects an image onto projection surface (1) from an oblique position includes transmission optical system (110) and transmission element (140). Transmission optical system (110) includes a lens element and magnifies the image displayed on image display element (130). Transmission element (140) is disposed on an optical path between transmission optical system (110) and projection surface (1), and transmits a light beam of the image without shielding the light beam. In at least one of an incident surface and an output surface of transmission element (140), it is assumed that a reference intersection is a point through which the light beam output from a center of the image passes in a principal ray, which is output from the image and passes through a center of a pupil of transmission optical system (110), and it is assumed that a reference vertical intersecting line is a line, which passes through the reference intersection and is parallel to a direction corresponding to a positive direction of a Y-axis. In the one of the surfaces of transmission element (140), a curvature with respect to a direction perpendicular to the reference vertical intersecting line is larger than a curvature with respect to a direction parallel to the reference vertical intersecting line. In the principal ray, the light beam incident on the reference vertical intersecting line includes the light beam parallel to a normal line of the one of the surfaces at the reference intersection.

FIG. 5

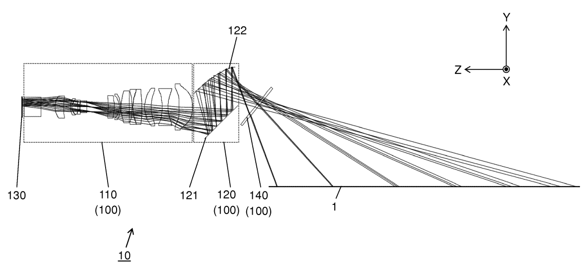


EP 3 373 059 A1

## Description

TECHNICAL FIELD

The present disclosure relates to a projection optical system and an image projection device including the projection optical system.

BACKGROUND ART

PTL 1 discloses a projection device in which a projection optical system including a reflection surface is used. The projection device of PTL 1 is a projection optical system that magnifies and projects an image formed in a light valve onto a projection surface. The projection optical system includes a plurality of lenses. The projection optical system includes a positive-power lens optical system that forms an intermediate image of the image, a positive-power first reflection surface that reflects a light flux diverging after the formation of the intermediate image and forms the image on the projection surface, and a second reflection surface that causes the light output from the lens optical system to strike on the first reflection surface between the projection surface and the light valve. Therefore, a large screen in which chromatic aberration and distortion are reduced can be projected.
Citation List

Patent Literature

PTL 1: Unexamined Japanese Patent Publication No. 2013-174886

SUMMARY OF THE INVENTION

In a projection optical system of the present disclosure, when a positional relationship is expressed using an XYZ coordinate, an image is magnified and projected onto a projection surface from an oblique position defined by a Y-axis and a Z-axis, the image being displayed on an image display element, being defined by a positive direction of an X-axis and a positive direction of the Y-axis, and including a long side parallel to the X-axis and a short side parallel to the Y-axis. The projection optical system includes a transmission optical system and a transmission element. The transmission optical system includes a lens element, and magnifies the image displayed on the image display element. The transmission element is disposed on an optical path between the transmission optical system and the projection surface, and transmits a light beam of the image without shielding the light beam. In at least one of an incident surface on which the light beam is incident and an output surface from which the light beam is output of the transmission element, assuming that a reference intersection is a point through which the light beam output from a center of the image passes in a principal ray, which is output from the image and passes through a center of a pupil of the transmission optical system, and assuming that a reference vertical intersecting line is a line, which passes through the reference intersection and is parallel to a direction corresponding to the positive direction of the Y-axis, in the one of the surfaces, a curvature with respect to a direction perpendicular to the reference vertical intersecting line is larger than a curvature with respect to a direction parallel to the reference vertical intersecting line, and in the principal ray, the light beam incident on the reference vertical intersecting line includes the light beam parallel to a normal line of the one of the surfaces at the reference intersection.
According to one aspect of the present disclosure, an image projection device magnifies and projects an image onto a projection surface from an oblique position defined by a Y-axis and a Z-axis when a positional relationship is expressed using an XYZ-coordinate. The image projection device includes an image display element, a transmission optical system, and a transmission element. The image display element displays the image, which is defined in a positive direction of an X-axis and a positive direction of a Y-axis and includes a long side parallel to the X-axis and a short side parallel to the Y-axis. The transmission optical system includes a lens element and magnifies the image. The transmission element is disposed on an optical path between the transmission optical system and the projection surface, and transmits a light beam of the image without shielding the light beam. In at least one of an incident surface on which the light beam is incident and an output surface from which the light beam is output of the transmission element, assuming that a reference intersection is a point through which the light beam output from a center of the image passes in a principal ray, which is output from the image and passes through a center of a pupil of the transmission optical system, and assuming that a reference vertical intersecting line is a line, which passes through the reference intersection and is parallel to a direction corresponding to the positive direction of the Y-axis, in the one of the surfaces, a curvature with respect to a direction perpendicular to the reference vertical intersecting line is larger than a curvature with respect to a direction parallel to the reference vertical intersecting line, and in the principal ray, the light beam incident on the reference vertical intersecting line includes the light beam parallel to a normal line of the one of the surfaces at the reference intersection.

In the projection optical system of the present disclosure, evenness of a luminance distribution of the image projected onto the projection surface can be improved.

BRIEF DESCRIPTION OF DRAWINGS

FIG. 1 is a block diagram illustrating an image projection device according to first to third exemplary embodiments.

FIG. 2 is a block diagram illustrating a transmission optical system of the first exemplary embodiment (Numerical Example 1).

FIG. 3 is a block diagram illustrating a transmission optical system of the second exemplary embodiment (Numerical Example 2).

FIG. 4 is a block diagram illustrating a transmission optical system of the third exemplary embodiment (Numerical Example 3).

FIG. 5 is a block diagram illustrating an image projection device according to a fourth exemplary embodiment.

FIG. 6 is a schematic diagram illustrating a transmission element of the fourth exemplary embodiment.

FIG. 7 is a graph illustrating a relationship between a position of an image on a screen and an angle of light incident on the transmission element in the fourth exemplary embodiment (Numerical Example 4).

FIG. 8 is a graph illustrating the relationship between the position of the image on the screen and the angle of the light incident on the transmission element in the fourth exemplary embodiment (Numerical Example 5).

FIG. 9 is a graph illustrating the relationship between the position of the image on the screen and the angle of the light incident on the transmission element in the fourth exemplary embodiment (Numerical Example 6).

FIG. 10 is a graph illustrating the relationship between the position of the image on the screen and the angle of the light incident on the transmission element in the fourth exemplary embodiment (Numerical Example 7).

FIG. 11 is a graph illustrating the relationship between the position of the image on the screen and the angle of the light incident on the transmission element in the fourth exemplary embodiment (Numerical Example 8).

FIG. 12 is a graph illustrating the relationship between the position of the image on the screen and the angle of the light incident on the transmission element in the fourth exemplary embodiment (Numerical Example 9).

FIG. 13 is a graph illustrating the relationship between the position of the image on the screen and the angle of the light incident on the transmission element in the fourth exemplary embodiment (Numerical Example 10).

FIG. 14 is a graph illustrating the relationship between the position of the image on the screen and the angle of the light incident on the transmission element in the fourth exemplary embodiment (Numerical Example 11).

FIG. 15 is a graph illustrating the relationship between the position of the image on the screen and the angle of the light incident on the transmission element in the fourth exemplary embodiment (Numerical Example 12).

FIG. 16 is a graph illustrating the relationship between the position of the image on the screen and the angle of the light incident on the transmission element in the fourth exemplary embodiment (Numerical Example 13).

FIG. 17 is a graph illustrating the relationship between the position of the image on the screen and the angle of the light incident on the transmission element in the fourth exemplary embodiment (Numerical Example 14).

FIG. 18 is a graph illustrating the relationship between the position of the image on the screen and the angle of the light incident on the transmission element in the fourth exemplary embodiment (Numerical Example 15).

FIG. 19 is a graph illustrating the relationship between the position of the image on the screen and the angle of the light incident on the transmission element in the fourth exemplary embodiment (Numerical Example 16).

FIG. 20 is a graph illustrating the relationship between the position of the image on the screen and the angle of the light incident on the transmission element in the fourth exemplary embodiment (Numerical Example 17).

FIG. 21 is a graph illustrating the relationship between the position of the image on the screen and the angle of the light incident on the transmission element in the fourth exemplary embodiment (Numerical Example 18).

FIG. 22 is a graph illustrating the relationship between the position of the image on the screen and the angle of the light incident on the transmission element in the fourth exemplary embodiment (Numerical Example 19).

FIG. 23 is a graph illustrating the relationship between the position of the image on the screen and the angle of the light incident on the transmission element in Comparative Example 1.

FIG. 24 is a graph illustrating the relationship between the position of the image on the screen and the angle of the light incident on the transmission element in Comparative Example 2.

FIG. 25 is a graph illustrating the relationship between the position of the image on the screen and the angle of the light incident on the transmission element in Comparative Example 3.

FIG. 26 is a graph illustrating the relationship between the position of the image on the screen and the angle of the light incident on the transmission element in Comparative Example 4.

DESCRIPTION OF EMBODIMENTS

Hereinafter, exemplary embodiments will be described in detail with reference to the drawings as appropriate. However, detailed description more than necessary may occasionally be omitted. For example, in some cases, detailed description of well-known matters or repeated description of substantially the same configuration may be omitted. This is to avoid that the following description is unnecessarily redundant, and to facilitate the understanding of those skilled in the art.

Note that the accompanying drawings and the following description are provided to allow a person skilled in the art to sufficiently understand the present disclosure and are not intended to limit subject matters described in the claims.

(First exemplary embodiment)

Image projection device 10 according to a first exemplary embodiment will be described below with reference to FIGS. 1 and 2.

For example, image projection device 10 of the first exemplary embodiment is used in a cabin of an aircraft. For example, image projection device 10 is disposed in a limited space such as a vicinity of a baggage locker, and projects an image onto a wall or a ceiling in the cabin.

In image projection device 10 of the first exemplary embodiment, the low profile can be achieved by a configuration of projection optical system 100, and the image distortion can be reduced even in the large screen. That is, in image projection device 10 of the first exemplary embodiment, the image distortion can be reduced by positive lenses (first lens L1, third lens L3, and fifth lens L5) disposed on the side of image display element 130 with respect to aperture stop A in projection optical system 100. Additionally, in image projection device 10 of the first exemplary embodiment, the image distortion can be reduced even in the large screen while the low profile of image projection device 10 is achieved using a first positive lens (eleventh lens L11) having a meniscus shape, a negative lens (twelfth lens L12), and a second positive lens (thirteenth lens L13) having a meniscus shape, which are disposed on a projection surface (screen 1) side of the aperture stop A.

[1-1. Configuration]

As illustrated in FIG. 1, image projection device 10 of the first exemplary embodiment includes projection optical system 100 and image display element 130. Projection optical system 100 includes transmission optical system 110 having positive power as a whole and reflection optical system 120. Projection optical system 100 projects the image formed by image display element 130 onto screen 1 located at a non-confronting position (oblique position). As used herein, the non-confronting position means the case that a direction of a line normal to screen 1 in a center of the image projected onto screen 1 is not matched with a direction of light passing through the center of the image in a light beam output from a final surface of projection optical system 100.

Image display element 130 forms a light flux of the image (hereinafter, referred to as an image light flux) projected onto screen 1 based on an image signal. Spatial modulation elements such as a digital mirror device (DMD) and a transmission or reflection type liquid crystal panel can be used as the image display element. A display surface of image display element 130 includes a long side parallel to an X-axis direction (a direction perpendicular to a paper plane) in FIG. 1 and a short side parallel to a Y-axis direction.

As illustrated in FIG. 2, transmission optical system 110 includes prism PB, aperture stop A, and first lens L1 to thirteenth lens L13. Prism PB, aperture stop A, and first lens L1 to thirteenth lens L13 are disposed between image display element 130 and screen 1.

First lens L1 is disposed on the side closest to image display element 130 in first lens L1 to thirteenth lens L13. Thirteenth lens L13 is disposed on the side closest to screen 1 in first lens L1 to thirteenth lens L13. First lens L1 to thirteenth lens L13 are disposed in this order.

Prism PB is disposed between first lens L1 and image display element 130. Aperture stop A is disposed between fifth lens L5 and sixth lens L6.

First lens L1 to thirteenth lens L13 will be described below. Hereinafter, it is assumed that an incident surface is a surface on which the light is incident from image display element 130, and that an output surface is a surface from which the light is output.

First lens L1 to fifth lens L5 are disposed on the side of image display element 130 with respect to aperture stop A.

First lens L1 is a positive-power lens having a meniscus shape. The incident surface of first lens L1 is a convex surface. The convex incident surface of transmission optical system 110 indicates that the convex surface is oriented toward the side of image display element 130.

Second lens L2 is a negative-power lens having a meniscus shape. The incident surface of second lens L2 is a convex surface. Second lens L2 is cemented onto an incident surface side of third lens L3.

Third lens L3 is a positive-power lens. The incident surface and output surface of third lens L3 are a convex surface.

Fourth lens L4 is a negative-power lens. The incident surface and output surface of fourth lens L4 are a concave surface. Fourth lens L4 is cemented onto an output surface side of third lens L3.

Fifth lens L5 is a positive-power lens. The incident surface and output surface of fifth lens L5 are a convex surface.

Sixth lens L6 to thirteenth lens L13 are disposed on the side of screen 1 with respect to aperture stop A.

Sixth lens L6 is a positive-power lens having a meniscus shape. The output surface of sixth lens L6 is a convex surface. The convex incident surface of transmission optical system 110 indicates that the convex surface is oriented toward the side of reflection optical system 120.

Seventh lens L7 is a negative-power lens having a meniscus shape. The output surface of seventh lens L7 is a convex surface.

Eighth lens L8 is a positive-power lens having a meniscus shape. The incident surface of eighth lens L8 is a convex surface.

Ninth lens L9 is a negative-power lens. The incident surface and output surface of ninth lens L9 are a concave surface.

Tenth lens L10 is a positive-power lens. The incident surface and output surface of tenth lens L10 are a convex surface.

Preferably the output surface of ninth lens L9 and the incident surface of tenth lens L10 are cemented to each other, and a cemented lens is constructed with ninth lens L9 and tenth lens L10. A lens having low dispersivity is used as ninth lens L9. In the first exemplary embodiment, a lens element having the largest Abbe number in transmission optical system 110 is used as ninth lens L9.

Eleventh lens L11 is a positive-power lens having a meniscus shape. The output surface of eleventh lens L11 is a concave surface. That is, the concave surface of eleventh lens L11 is oriented toward the side of reflection optical system 120.

Twelfth lens L12 is a negative-power lens. The incident surface and output surface of twelfth lens L12 are a concave surface. Preferably at least one of the incident surface and output surface of twelfth lens L12 has an aspherical shape. Specifically, preferably the aspherical surface of twelfth lens L12 lens has a shape in which a curvature decreases toward a radial direction from the center of the lens. That is, preferably the power in a peripheral portion of the lens is smaller than that in a central portion of the lens.

Thirteenth lens L13 is a positive-power lens having a meniscus shape. The incident surface of thirteenth lens L13 is a concave surface. That is, the concave surface of thirteenth lens L13 is oriented toward the side of image display element 130. Thirteenth lens L13 is formed into a shape having the largest thickness deviation ratio in the meniscus-shape lenses included in transmission optical system 110.

Eleventh lens 11 and thirteenth lens L13 are disposed such that the concave surfaces of eleventh lens 11 and thirteenth lens L13 face each other. Twelfth lens L12 is disposed between eleventh lens L11 and thirteenth lens L13.

Preferably at least one of the incident surface and output surface in each of eleventh lens L11 and thirteenth lens L13 has an aspherical shape.

In transmission optical system 110 of the first exemplary embodiment, focusing is performed using two lens groups. One lens group includes second lens L2, third lens L3, fourth lens L4, and fifth lens L5. Second lens L2 to fifth lens L5 are integrally formed. A distance between fourth lens L4 and the fifth lens does not change. The other lens group includes eleventh lens L11, twelfth lens L12, and thirteenth lens L13. Eleventh lens L11 to thirteenth lens L13 are integrally formed. A distance between eleventh lens L11 and twelfth lens L12 and a distance between twelfth lens L12 and thirteenth lens L13 do not change. Each of the lens groups is integrally moved during the focusing.

Reflection optical system 120 reflects a light flux output from transmission optical system 110, and projects the light flux onto screen 1. Reflection optical system 120 is constructed with first mirror 121 and second mirror 122. A reflection surface of second mirror 122 has a free curved surface shape. The reflection optical system is not limited to the two mirrors, but may be constructed with at least one mirror.

An intermediate image is formed between transmission optical system 110 and screen 1. For example, the first exemplary embodiment will be described with reference to FIGS. 1 and 2. The intermediate image is formed when points at which the light beams intersect each other are connected between the output surface of thirteenth lens L13 and the reflection surface of second mirror 122. When the intermediate image is formed, because a conjugate position of the light beam output from transmission optical system 110 and second mirror 122 located on the side closest to the screen is lengthened, an angle of the light beam incident on second mirror 122 decreases, and it is advantageous for the miniaturization of the reflection optical system.

[1-2. Effects]

In image projection device 10 of the first exemplary embodiment, the positive lenses (first lens L1, third lens L3, and fifth lens L5) are disposed on the side of image display element 130 with respect to aperture stop A. These positive lenses can focus the light beam output in the direction perpendicular to a display surface of image display element 130 on one point using aperture stop A. Accordingly, the image distortion of the image projected onto screen 1 can be reduced.

In image projection device 10 of first exemplary embodiment, thirteenth lens L13 can suppress spread of the light beam incident on first mirror 121. When the light beam incident on first mirror 121 spreads, it is necessary to enlarge first mirror 121 in a lower portion on the paper plane in FIG. 1, and sometimes image projection device 10 is enlarged. In the first exemplary embodiment, the spread of the light beam is suppressed by thirteenth lens L13, so that the position of first mirror 121 can be brought close to second mirror 122 as much as possible. Accordingly, the miniaturization and low profile of image projection device 10 can be achieved.

In image projection device 10 of the first exemplary embodiment, using eleventh lens L11, twelfth lens L12, and thirteenth lens L13, a field curvature can favorably corrected in a balanced manner, and the distortion of the image projected onto screen 1 can be corrected.

In the first exemplary embodiment, thirteenth lens L13 disposed on the side of screen 1 with respect to twelfth lens L12 is formed into the shape having the largest thickness deviation ratio in the meniscus-shape lenses included in transmission optical system 110. This enables an increase of a difference in refractive power between the center and the periphery of thirteenth lens L13, so that it is effective in correcting the field curvature.

In the first exemplary embodiment, the light flux incident on ninth lens L9 and tenth lens L10 is increased by seventh lens L7 having the negative meniscus shape. In the first exemplary embodiment, the low-dispersivity lens is used as negative-power ninth lens L9 in the cemented lens constructed with ninth lens L9 and tenth lens L10. This enables magnification chromatic aberration to be favorably corrected. The cemented lens constructed with ninth lens L9 and tenth lens L10 has positive refractive power as a whole, which allows the positive field curvature to be favorably corrected.

In the first exemplary embodiment, each the lens group constructed with second lens L2 to fifth lens L5 and the lens group constructed with eleventh lens L11 to thirteenth lens L13 is integrally moved, and moved during the focusing. Therefore, good optical performance can be satisfied even if a projection length varies.

In the first exemplary embodiment, the intermediate image is formed between transmission optical system 110 and screen 1. Therefore, the distortion of the image reflected by first mirror 121 and second mirror 122 decreases, and the large screen can be made. That is, the large screen can be made even if the distance between image display element 130 and screen 1 is shortened.

In the first exemplary embodiment, projection optical system 100 can be miniaturized using transmission optical system 110. When reflection optical system 120 is also used, the light beam can steeply be deflected. Accordingly, the large screen can be made even if the distance between image display element 130 and screen 1 is shortened.

(Second exemplary embodiment)

Image projection device 10 according to a second exemplary embodiment will be described below with reference to FIGS. 1 and 3. Because a basic configuration of image projection device 10 of the second exemplary embodiment is similar to that of the first exemplary embodiment, the similar configuration is designated by the same reference mark, and the description is omitted. Because basic configurations of first lens L1 to thirteenth lens L13 are similar to those of the first exemplary embodiment, the similar configurations are designated by the same reference mark, and the description is omitted.

[2-1. Configuration]

Projection optical system 100 of the second exemplary embodiment includes transmission optical system 110 having positive power as a whole and reflection optical system 120.

In the second exemplary embodiment, positions of sixth lens L6, seventh lens L7, eighth lens L8, ninth lens L9, tenth lens L10, eleventh lens L11, twelfth lens L12, and thirteenth lens L13 are fixed, and a mutual distance does not change.

In transmission optical system 110 of the second exemplary embodiment, preferably the focusing is performed using at least one lens group. For example, second lens L2, third lens L3, fourth lens L4, and fifth lens L5 are integrated to form a lens group. Second lens L2, third lens L3, and fourth lens L4 constitute the cemented lens similarly to the first exemplary embodiment, the distance between fourth lens L4 and fifth lens L5 does not change. Preferably the lens group constructed with second lens L2 to fifth lens L5 is integrally moved to perform the focusing. Therefore, the good optical performance can be obtained even if the projection length varies.

[2-2. Effects]

In the second exemplary embodiment, similarly to the first exemplary embodiment, the low profile of image projection device 10 can be achieved by the configuration of projection optical system 100, and the image distortion can be reduced even in the large screen.

(Third exemplary embodiment)

Image projection device 10 according to a third exemplary embodiment will be described below with reference to FIG. 4. Because a basic configuration of image projection device 10 of the third exemplary embodiment is similar to that of the first exemplary embodiment, the similar configuration is designated by the same reference mark, and the description is omitted. Because basic configurations of first lens L1 to seventh lens L7, ninth lens L9, and eleventh lens L11 to thirteenth lens L13 are similar to those of the first exemplary embodiment, the similar configurations are designated by the same reference mark, and the description is omitted.

[3-1. Configuration]

Projection optical system 100 of the third exemplary embodiment includes transmission optical system 110 having positive power as a whole and reflection optical system 120.

In the third exemplary embodiment, unlike the first exemplary embodiment, eighteenth lens L18 in FIG. 4 is used instead of eighth lens L8 in FIG. 2. That is, eighteenth lens L18 is disposed between seventh lens L7 and ninth lens L9. In the third exemplary embodiment, unlike the first exemplary embodiment, tenth lens L10 is not used. That is, eleventh lens L11 is disposed on the side of screen 1 of ninth lens L9.

That is, transmission optical system 110 of the third exemplary embodiment includes first lens L1, second lens L2, third lens L3, fourth lens L4, fifth lens L5, sixth lens L6, seventh lens L7, eighteenth lens L18, ninth lens L9, eleventh lens L11, twelfth lens L12, and thirteenth lens L13 between image display element 130 and screen 1, and these lenses are disposed in the above order.

Eighteenth lens L18 is a positive-power lens. The incident surface and output surface of eighteenth lens L18 are a convex surface. Preferably eighteenth lens L18 and ninth lens L9 constitute a cemented lens. That is, preferably the output surface of eighteenth lens L18 and the incident surface of ninth lens L9 are cemented to each other. The lens having the low dispersivity is used as negative-power ninth lens L9. In the third exemplary embodiment, ninth lens L9 is a lens element having the largest Abbe number in transmission optical system 110. The cemented lens of eighteenth lens L18 and ninth lens L9 has a positive refractive power as a whole.

In transmission optical system 110, the focusing is performed using two lens groups. One lens group includes second lens L2 to fifth lens L5. Second lens L2 to fifth lens L5 are integrally formed. The other lens group includes eleventh lens L11, twelfth lens L12, and thirteenth lens L13. Eleventh lens L11 to thirteenth lens L13 are integrally formed. Each of the lens groups is integrally moved during the focusing. Therefore, good optical performance can be satisfied even if a projection length varies.

[3-2. Effects]

In the third exemplary embodiment, similarly to the first exemplary embodiment, the low profile can be achieved by the configuration of projection optical system 100, and the image distortion can be reduced even in the large screen.

In the third exemplary embodiment, the light flux incident on eighteenth lens L18 and ninth lens L9 is increased by seventh lens L7 having the negative meniscus shape. At this point, in the third exemplary embodiment, the low-dispersivity lens is used as negative-power ninth lens L9 in the cemented lens, a chromatic aberration can favorably be corrected using the cemented lens. The cemented lens constructed with eighteenth lens L18 and ninth lens L9 has the positive refractive power as a whole, which allows the positive field curvature to be favorably corrected.

A preferable condition satisfied by, for example, projection optical system 100 of the first to third exemplary embodiments will be described below. A plurality of preferable conditions are defined with respect to projection optical system 100 of the first to third exemplary embodiments, and a configuration satisfying all the plurality of conditions is most preferable. However, the projection optical system can also obtain the corresponding effect by satisfying the individual condition.

In the projection optical system of the first to third exemplary embodiments, preferably the lens (eleventh lens L11) disposed on the side of image display element 130 in the meniscus-shape, positive-power lenses (eleventh lens L11 and thirteenth lens L13), which are disposed such that the concave surfaces of the lenses face each other, satisfies the following condition (1-1).

$$1 < |(R2 + R1)/(R2 - R1)| < 10 \quad \cdots (1\text{-}1)$$

Where

R1 is a curvature radius of one of the surfaces of the lens disposed on the image display element side, and
R2 is a curvature radius of the surface opposite to R1 of the lens disposed on the image display element side.

When the lens satisfies the condition (1-1), generation of lens distortion is suppressed to a proper amount while the field curvature is corrected on the projection surface (screen 1).

The above effect can further be obtained by satisfying the following condition (1-2).

$$3 < |(R2 + R1)/(R2 - R1)| < 8 \quad \cdots (1\text{-}2)$$

Table 1 illustrates each corresponding value obtained for projection optical systems of Numerical Examples 1 to 3. The corresponding value means a value of (R2 + R1)/(R2 - R1).

(Corresponding value)

[Table 1]

| | Numerical Example 1 | Numerical Example 2 | Numerical Example 3 |
|---|---|---|---|
| Corresponding Value | 5.12470 | 1.08733 | 7.02124 |

(Fourth exemplary embodiment)

[4-1. Configuration]

As illustrated in FIG. 5, image projection device 10 according to a fourth exemplary embodiment includes transmission optical system 110 having a positive power as a whole, reflection optical system 120, image display element 130, and transmission element 140. Transmission optical system 110, reflection optical system 120, and transmission element 140 constitute projection optical system 100 of the fourth exemplary embodiment. Because the configurations of transmission optical system 110, reflection optical system 120, and image display element 130 are similar to those of transmission optical system 110, reflection optical system 120, and image display element 130 of the first exemplary embodiment, the description is omitted.

Similarly to image projection device 10 of the first exemplary embodiment, image projection device 10 of the fourth exemplary embodiment projects an image (image 131 in FIG. 6) formed by display element 130 onto screen 1 located at a non-confronting position. Image 131 formed by image display element 130 has a rectangular shape defined by the positive direction of the X-axis and the positive direction of the Y-axis in FIG. 5. The image has a long side (long side 131a in FIG. 6) parallel to the X-axis and a short side (short side 131b in FIG. 6) parallel to the Y-axis. Image display element 130 is disposed in an obliquely upper side of screen 1, and projects the image from obliquely upward. As used herein, the term of obliquely upward means a position defined by the positive direction of the Y-axis and the positive direction of the Z-axis in FIG. 5.

Transmission element 140 is disposed between reflection optical system 120 and screen 1. Transmission element 140 is an optical element that transmits the light flux reflected by reflection optical system 120 to screen 1. Transmission element 140 is made of resin. At this point, in transmission element 140, it is assumed that the incident surface is a surface on which the light beam from the image of image display element 130 is incident. In transmission element 140, it is assumed that the output surface is a surface from which the light beam from the image of image display element 130 is output. The incident surface and output surface of transmission element 140 have a toroidal shape. The incident surface of transmission element 140 is a surface defined by the long-side direction (the X-axis direction perpendicular to the paper plane in FIG. 5) of image display element 130 and the direction (the direction corresponding to the Y-axis direction) corresponding to the short-side direction. The incident surface and output surface of transmission element 140 have different curvatures in the long-side direction of image display element 130 and the direction corresponding to the short-side direction. That is, transmission element 140 is a toroidal lens, and has the shape in which the convex surface is oriented toward the side of screen 1. In the incident surface of transmission element 140, the curvature in the long-side direction (X-axis direction) of image display element 130 is larger than the curvature in the direction corresponding to the short-side direction (Y-axis direction). Similarly, in the output surface of transmission element 140, the curvature in the long-side direction (X-axis direction) of image display element 130 is larger than the curvature in the direction corresponding to the short-side direction (Y-axis direction).

An angle of the light beam incident on transmission element 140 will be described with reference to FIG. 6. It is assumed that image 131 is an image displayed on image display element 130. It is assumed that principal ray L is a light beam, which is output from image 131 and passes through the center of a pupil of transmission optical system 110. It is assumed that reference intersection BO is a position through which principal ray L output from center O of image 131 passes in the incident surface of transmission element 140. It is assumed that reference vertical intersecting line BL is an intersecting line, which passes through reference intersection BO and is parallel to the direction corresponding to the direction (Y-axis direction) parallel to short side 131b of image 131. At this point, principal ray L incident on reference vertical intersecting line BL includes the light beam parallel to a normal line at reference intersection BO. In the case that principal ray L incident on the reference vertical intersecting line of transmission element 140 includes the light beam parallel to the normal line at reference intersection BO, an incident angle of principal ray L output from the whole of image 131 with respect to transmission element 140 can be decreased (however, the incident angle of principal ray L parallel to the normal line is set to 0 degree). The reflection of principal ray L by transmission element 140 can be suppressed when the incident angle is decreased. This enable the suppression of a decrease in light amount transmitted through transmission element 140. Particularly, like image projection device 10 of the present disclosure, in the case that the projection is performed onto screen 1 from the non-confronting position while the distance between image projection device 10 and screen 1 is shortened, the above effect is further obtained.

In projection optical system 100 of the fourth exemplary embodiment, preferably transmission element 140 is disposed so as to satisfy the following conditional expression (2).

$$0 < Yp < 0.9 \quad \cdots (2)$$

Where

Yp is a relative position on screen 1 at which principal ray L, which passes through reference vertical intersecting line BL and is parallel to the normal line at reference intersection BO, arrives in the case that a position at an arbitrary point on a straight line, which passes through the center of the projection image and is parallel to the short side of the image (hereinafter, referred to as a projection image) projected onto screen 1, is relatively expressed from 0 to 1 in the direction corresponding to the positive direction of the Y-axis of image 131 in the projection image.

Relative position Yp will specifically be described. In the projection image projected onto screen 1, the position of the light beam incident on the position closest to the final output surface (in the fourth exemplary embodiment, the output surface of transmission element 140) of projection optical system 100 is set to 0. In the projection image, the position of the light beam incident on the position farthest from the final output surface of projection optical system 100 is set to 1. In other words, in image 131 displayed on image display element 130, the position on screen 1 at which principal ray L output from the lowest position (point of 0) arrives in the positive direction of the Y-axis in FIG. 5 is 0. In image 131, the position on screen 1 at which principal ray L output from the highest position arrives in the positive direction of the Y-axis is 1.

When the condition (2) is satisfied, the incident angle of the whole principal ray L with respect to transmission element 140 can be suppressed to a small level. That is, attenuation of light amount of principal ray L output from an end of image 131 can be suppressed. Accordingly, the evenness of the luminance distribution of the projection image projected onto screen 1 can be improved.

The above effect can further be obtained by satisfying the following condition (2-1).

$$0 < Yp < 0.6 \quad \cdots (2\text{-}1)$$

The above effect can further be obtained by satisfying the following condition (2-2).

$$0 < Yp < 0.5 \quad \cdots (2\text{-}2)$$

Transmission element 140 can be disposed in an opening made in a housing of image projection device 10. The light flux passes the opening. Sometimes a cover glass is disposed in the opening such that dirt or dust does not enter the housing of image projection device 10 from the opening. Accordingly, transmission element 140 can also be used as the cover glass.

Table 2 illustrates relative position Yp in projection optical system 100 of Numerical Examples 4 to 11.

[Table 2]

| | Numerical Example 4 | Numerical Example 5 | Numerical Example 6 | Numerical Example 7 | Numerical Example 8 | Numerical Example 9 | Numerical Example 10 | Numerical Example 11 |
|---|---|---|---|---|---|---|---|---|
| Relative Position Yp | 0.7 | 0.4 | 0.25 | 0.12 | 0.8 | 0.46 | 0.27 | 0.15 |

Table 3 illustrates relative position Yp in projection optical system 100 of Numerical Examples 12 to 19.

[Table 3]

| | Numerical Example 12 | Numerical Example 13 | Numerical Example 14 | Numerical Example 15 | Numerical Example 16 | Numerical Example 17 | Numerical Example 18 | Numerical Example 19 |
|---|---|---|---|---|---|---|---|---|
| Relative Position Yp | 0.08 | 0.2 | 0.46 | 0.92 | 0.04 | 0.16 | 0.32 | 0.62 |

[4-2. Effects]

In the fourth exemplary embodiment, a curvature of the incident surface of transmission element 140 with respect to the direction perpendicular to reference vertical intersecting line BL is larger than a curvature with respect to the direction parallel to reference vertical intersecting line BL. Therefore, the incident angle of principal ray L output from the whole long-side direction of image 131 with respect to transmission element 140 can be decreased. Accordingly, the reflection of principal ray L output from the whole long-side direction of image 131 by transmission element 140 can be suppressed, and the evenness of the luminance distribution of the whole long-side direction of the projection image can be achieved.

In the fourth exemplary embodiment, principal ray L incident on reference vertical intersecting line BL includes the light beam parallel to the normal line of the incident surface of transmission element 140 at reference intersection BO. Therefore, the incident angle of principal ray L output from the whole short-side direction of image 131 with respect to transmission element 140 can be decreased. Accordingly, the incident angle of principal ray L output from the whole short-side direction of image 131 with respect to transmission element 140 can be decreased. Accordingly, the reflection of principal ray L output from the whole short-side direction of image 131 by transmission element 140 can be suppressed, and the evenness of the luminance distribution of the whole short-side direction of the projection image can be achieved.

[4-3. Modifications]

In the fourth exemplary embodiment, both the incident surface and reflection surface of transmission element 140 are formed into the toroidal surface. However, at least one of the incident surface and reflection surface may be a surface having different curvatures in two directions orthogonal to each other. At least one of the incident surface and reflection surface of transmission element 140 may be a free curved surface.

Reflection optical system 120 of the fourth exemplary embodiment includes first mirror 121 and second mirror 122. For example, reflection optical system 120 needs not to include first mirror 121. That is, reflection optical system 120 may be constructed only with second mirror 122 in which the reflection surface is a concave surface of the free curved surface.

In the fourth exemplary embodiment, first mirror 121 having the flat reflection surface is disposed at the position closer to image display element 130 than second mirror 122 having the concave reflection surface is. However, the disposition except for the fourth exemplary embodiment may be adopted. That is, second mirror 122 may be disposed at a position closer to image display element 130 than first mirror 121 is.

Projection optical system 100 of the fourth exemplary embodiment includes reflection optical system 120. Alternatively, projection optical system 100 needs not to include reflection optical system 120.

Because transmission element 140 of the fourth exemplary embodiment is made of resin, the toroidal surface or the free curved surface is easy to process. However, transmission element 140 may be made of a material except for resin, for example, glass.

Numerical examples in which the projection optical system of the exemplary embodiments is specifically implemented will be described below. In each numerical example, a unit of a length is (mm), and a unit of an angle of view is (degrees) in Tables. In each numerical example, r is a curvature radius, d is an interplanar spacing, nd is a refractive index to the d line, and vd is an Abbe number to the d line. In each numerical example, a surface denoted by an asterisk is an aspherical surface, and an aspherical shape is defined by the following formula.

[Mathematical Formula 1]

$$Z = \frac{h^2 / r}{1 + \sqrt{1 - (1+\kappa)(h/r)^2}} + \sum A_n h^n$$

Where

Z is a distance between a point on an aspherical surface having height h from an optical axis and a tangential plane of an aspherical vertex,
h is the height from the optical axis,
r is a vertex curvature radius,
K is a conic constant, and
An is an n-degree aspherical coefficient.

Only an aspherical coefficient except for zero is written in addition to a conic constant K. In the lens group data, a lens configuration length is a distance from a first surface to a final surface, a front-side principal point position is a distance from the first surface, and a rear-side principal point position is a distance from the first surface.

(Numerical Example 1)

Data 1 to data 5 below illustrate specific data of a transmission optical system of Numerical Example 1. The transmission optical system of Numerical Example 1 corresponds to transmission optical system 110 of the first exemplary embodiment (FIG. 2).

A surface having surface number 1 of data 1 indicates an incident surface of prism PB in FIG. 2, and a surface having surface number 2 indicates an output surface of prism PB. A surface having surface number 3 indicates the incident surface of first lens L1, and a surface having surface number 4 indicates the output surface of first lens L1. A surface having surface number 5 indicates the incident surface of second lens L2, a surface having surface number 6 indicates the cemented surface of second lens L2 and third lens L3, a surface having surface number 7 indicates the cemented surface of third lens L3 and fourth lens L4, and a surface having surface number 8 indicates the output surface of fourth lens L4. A surface having surface number 9 indicates the incident surface of fifth lens L5, and a surface having surface number 10 indicates the output surface of fifth lens L5. A surface having surface number 11 indicates aperture stop A. A surface having surface number 12 indicates the incident surface of sixth lens L6, and a surface having surface number 13 indicates the output surface of sixth lens L6. A surface having surface number 14 indicates the incident surface of seventh lens L7, and a surface having surface number 15 indicates the output surface of seventh lens L7. A surface having surface number 16 indicates the incident surface of eighth lens L8, and a surface having surface number 17 indicates the output surface of eighth lens L8. A surface having surface number 18 indicates the incident surface of ninth lens L9, a surface having surface number 19 indicates the cemented surface of ninth lens L9 and tenth lens L10, and a surface having surface number 20 indicates the output surface of tenth lens L10. A surface having surface number 21 indicates the incident surface of eleventh lens L11, and a surface having surface number 22 indicates the output surface of eleventh lens L11. A surface having surface number 23 indicates the incident surface of twelfth lens L12, and a surface having surface number 24 indicates the output surface of twelfth lens L12. A surface having surface number 25 indicates the incident surface of thirteenth lens L13, and a surface having surface number 26 indicates the output surface of thirteenth lens L13.

The surface number of data 2 is identical to the surface number of data 1.

Lens 1 of data 4 corresponds to prism PB, and lens 2 to lens 14 correspond to first lens L1 to thirteenth lens L13, respectively.

Lens group 1 of data 5 corresponds to first lens L1, lens group 2 corresponds to second lens L2 to fifth lens L5, lens group 3 corresponds to sixth lens L6 to tenth lens L10, and lens group 4 corresponds to eleventh lens L11 to thirteenth lens L13.

[Data 1]

Surface data

| Surface number | r | D | nd | vd | effective diameter |
|---|---|---|---|---|---|
| Image display element | | ∞ | | | |
| 1 | ∞ | 14.99500 | 1.51680 | 64.2 | |
| 2 | ∞ | 12.72300 | | | |
| 3* | 17.23400 | 8.00300 | 1.59349 | 67.0 | |
| 4* | 315.80500 | variable | | | 15.904 |
| 5 | 14.22900 | 1.50000 | 2.00069 | 25.5 | |
| 6 | 8.67800 | 5.15000 | 1.49700 | 81.6 | |
| 7 | -34.20000 | 1.49900 | 1.90366 | 31.3 | |
| 8 | 19.05500 | 0.49900 | | | |
| 9 | 16.72300 | 6.17600 | 1.84666 | 23.8 | 4.690 |

(continued)

| Surface number | r | D | nd | vd | effective diameter |
|---|---|---|---|---|---|
| 10 | -156.51000 | variable | | | |
| 11 (stop) | ∞ | 14.49000 | | | 4.365 |
| 12 | -120.75700 | 5.57200 | 1.78472 | 25.7 | |
| 13 | -56.17000 | 4.58500 | | | |
| 14 | -13.97000 | 1.00400 | 1.91082 | 35.2 | |
| 15 | -21.26300 | 0.29600 | | | |
| 16 | 40.92700 | 7.46700 | 1.72342 | 38.0 | |
| 17 | -1962.27200 | 2.30200 | | | |
| 18 | -60.74800 | 1.19800 | 1.49700 | 81.6 | |
| 19 | 39.71400 | 7.66800 | 1.63854 | 55.4 | |
| 20 | -168.43100 | variable | | | |
| 21 | 25.80000 | 5.91200 | 1.78590 | 43.9 | |
| 22 | 38.31000 | 9.60800 | | | |
| 23* | -53.54700 | 5.23500 | 1.68893 | 31.1 | 21.794 |
| 24* | 24.57000 | 10.18400 | | | 24.740 |
| 25* | -187.91700 | 11.83400 | 1.53775 | 74.7 | 21.205 |
| 26* | -25.79200 | | | | 21.794 |

[Data 2]

Aspherical data

Third surface

K = -6.09400E-02, A4 = 1.98117E-05, A6 = 1.56997E-08, A8 = -4.62804E-10 A10 = -1.19399E-13, A12 = 8.76682E-15, A14 = -2.09485E-16, A16 = 2.51704E-18

Fourth surface

K = -1.00000E+02, A4 = 4.71492E-05, A6 = 1.33281E-07, A8 = -5.51156E-10 A10 = -1.55150E-11, A12 = -2.25085E-14, A14 = 2.52558E-15, A16 = -7.77899E-18

Twenty-third surface

K = 1.11067E+00, A4 = 6.33930E-06, A6 = -2.59108E-07, A8 = 9.71178E-10 A10 = -1.04904E-12, A12 = -2.26872E-16, A14 = -1.58698E-19, A16 = 1.77042E-21

Twenty-fourth surface

K = -1.66300E-02, A4 = -4.34030E-05, A6 = 3.86699E-08, A8 = -1.80419E-11 A10 = -1.24012E-13, A12 = 1.25649E-16, A14 = 1.87457E-19, A16 = -5.10267E-22

Twenty-fifth surface

K = -9.41608E+01, A4 = -4.67773E-05, A6 = -2.01376E-07, A8 = 1.51882E-09 A10 = -2.50674E-12, A12 = -1.46260E-16, A14 = 1.84046E-19, A16 = 4.28649E-21

Twenty-sixth surface

K = -2.08200E-02, A4 = -1.69368E-05, A6 = -5.91673E-08, A8 = 1.07391E-10 A10 = 1.23694E-13, A12 = -2.06773E-16, A14 = -2.43725E-20, A16 = 8.16055E-22

[Data 3]

Various pieces of data

| Projection area | 80" | 100" | 50" |
|---|---|---|---|
| Focal distance | 37.3470 | 37.3021 | 37.4561 |
| d4 | 5.6380 | 5.4328 | 6.2488 |
| d10 | 4.3540 | 4.5571 | 3.7411 |
| d20 | 2.6040 | 2.8223 | 1.5986 |

[Data 4]

Single lens data

| Lens | start surface | focal distance |
|---|---|---|
| 1 | 1 | ∞ |
| 2 | 3 | 30.4108 |
| 3 | 5 | -25.7030 |
| 4 | 6 | 14.5054 |
| 5 | 7 | -13.3631 |
| 6 | 9 | 18.1415 |
| 7 | 12 | 128.9402 |
| 8 | 14 | -47.8583 |
| 9 | 16 | 55.5055 |
| 10 | 18 | -48.1287 |
| 11 | 19 | 51.0611 |
| 12 | 21 | 83.2253 |
| 13 | 23 | -23.7961 |
| 14 | 25 | 54.2093 |

[Data 5]

Lens group data

| Group | start surface | focal distance | lens configuration length | front-side principal point position | rear-side principal point position |
|---|---|---|---|---|---|
| 1 | 1 | 30.41079 | 35.72100 | 22.32193 | 30.46131 |
| 2 | 5 | 75.30926 | 14.82400 | 0.46045 | 5.86471 |
| 3 | 11 | 219.36841 | 44.58200 | 31.27514 | 40.72933 |
| 4 | 21 | 717.01958 | 42.77300 | 138.60457 | 153.67075 |

(Numerical Example 2)

Data 6 to data 9 below illustrate specific data of a transmission optical system of Numerical Example 2. The transmission optical system of Numerical Example 2 corresponds to transmission optical system 110 of the second exemplary embodiment (FIG. 3).

The surface number of data 6 indicates the same surface as the surface number of data 1.

The surface number of data 7 is identical to the surface number of data 6.

A lens number of data 9 indicates the same lens as a lens number of data 4.

[Data 6]

Surface data

| Surface number | r | d | nd | vd | effective diameter |
|---|---|---|---|---|---|
| Image display element | | ∞ | | | |
| 1 | ∞ | 15.00000 | 1.51680 | 64.2 | |
| 2 | ∞ | 12.66300 | | | |
| 3* | 17.19300 | 8.00000 | 1.59349 | 67.0 | |
| 4* | 290.32200 | 5.10600 | | | 12.510 |
| 5 | 14.48000 | 1.50000 | 2.00069 | 25.5 | |
| 6 | 8.78200 | 5.08500 | 1.49700 | 81.6 | |
| 7 | -32.37200 | 1.50000 | 1.90366 | 31.3 | |
| 8 | 19.67100 | 0.50000 | | | |
| 9 | 17.21600 | 3.54300 | 1.84666 | 23.8 | 4.696 |
| 10 | -122.74800 | 6.15600 | | | |
| 11 (stop) | ∞ | 14.49800 | | | 4.330 |
| 12 | -93.48000 | 4.07700 | 1.78472 | 25.7 | |
| 13 | -52.70900 | 4.39600 | | | |
| 14 | -13.56800 | 1.00000 | 1.91082 | 35.2 | |
| 15 | -19.77000 | 0.50000 | | | |
| 16 | 40.73100 | 10.43500 | 1.72342 | 38.0 | |
| 17 | 973.57600 | 1.96300 | | | |
| 18 | -77.44100 | 1.20000 | 1.49700 | 81.6 | |
| 19 | 36.71000 | 11.51300 | 1.63854 | 55.4 | |
| 20 | -342.73900 | 2.60000 | | | |

(continued)

| Surface number | r | d | nd | vd | effective diameter |
|---|---|---|---|---|---|
| 21 | 25.66400 | 6.04000 | 1.78590 | 43.9 | |
| 22 | 37.83000 | 9.89400 | | | |
| 23* | -55.70200 | 3.94100 | 1.68893 | 31.1 | 21.756 |
| 24* | 24.47000 | 10.21300 | | | 24.476 |
| 25* | -210.37000 | 11.57500 | 1.53775 | 74.7 | 20.668 |
| 26* | -25.63500 | | | | 21.756 |

[Data 7]

Aspherical data

Third surface

K = -6.04699E-02, A4 = 1.98616E-05, A6 = 7.35058E-09, A8 = -5.05794E-10 A10 = 8.61968E-13, A12 = 1.71901E-14, A14 = -2.36028E-16, A16 = 2.18449E-18

Fourth surface

K = -1.00000E+02, A4 = 4.69902E-05, A6 = 1.18022E-07, A8 = -5.22552E-10 A10 = -1.47332E-11, A12 = 2.91990E-15, A14 = 2.91462E-15, A16 = -1.40152E-17

Twenty-third surface

K = 9.17327E-01, A4 = 6.73643E-06, A6 = -2.61030E-07, A8 = 9.70513E-10 A10 = -1.04173E-12, A12 = -2.23528E-16, A14 = -2.05136E-19, A16 = 1.76480E-21

Twenty-fourth surface

K = -8.76498E-03, A4 = -4.37627E-05, A6 = 4.02825E-08, A8 = -1.52276E-11 A10 = -1.22414E-13, A12 = 1.22226E-16, A14 = 1.72616E-19, A16 = -5.04200E-22

Twenty-fifth surface

K = -1.00000E+02, A4 = -4.72581E-05, A6 = -2.01657E-07, A8 = 1.52205E-09 A10 = -2.49780E-12, A12 = -1.19138E-16, A14 = 2.16018E-19, A16 = 4.21484E-21

Twenty-sixth surface

K = -1.08792E-02, A4 = -1.70130E-05, A6 = -6.04647E-08, A8 = 1.04246E-10 A10 = 1.35513E-13, A12 = -1.79293E-16, A14 = -1.16542E-21, A16 = 8.03042E-22

[Data 8]

Various pieces of data

Focal distance 38.1700

[Data 9]

Single lens data

| Lens | start surface | focal distance |
|---|---|---|
| 1 | 1 | ∞ |
| 2 | 3 | 30.4604 |
| 3 | 5 | -25.6835 |
| 4 | 6 | 14.4940 |
| 5 | 7 | -13.3576 |
| 6 | 9 | 18.0422 |
| 7 | 12 | 147.5199 |
| 8 | 14 | -51.4384 |
| 9 | 16 | 58.4874 |
| 10 | 18 | -49.9354 |
| 11 | 19 | 52.5497 |
| 12 | 21 | 83.3357 |
| 13 | 23 | -24.1927 |
| 14 | 25 | 53.1220 |

(Numerical Example 3)

Data 10 to data 14 below illustrate specific data of a transmission optical system of Numerical Example 3. The transmission optical system of Numerical Example 3 corresponds to transmission optical system 110 of the third exemplary embodiment (FIG. 4).

Surface numbers 1 to 15 of data 10 indicate the same surfaces as the surface numbers 1 to 15 of data 1. Surface number 16 of data 10 indicates the incident surface of ninth lens L18, surface number 17 indicates the cemented surface of eighteenth lens L18 and ninth lens L9, and surface number 18 indicates the output surface of ninth lens L9. Surface number 19 indicates the incident surface of eleventh lens L11, and surface number 20 indicates the output surface of eleventh lens L11. Surface number 21 indicates the incident surface of twelfth lens L12, and surface number 22 indicates the output surface of twelfth lens L12. Surface number 23 indicates the incident surface of thirteenth lens L13, and surface number 24 indicates the output surface of thirteenth lens L13.

The surface number of data 11 is identical to the surface number of data 10.

Lens 1 of data 13 corresponds to prism PB, and lens 2 to lens 8 correspond to first lens L1 to seventh lens L7, respectively. Lens 9 corresponds to eighteenth lens L18. Lens 10 corresponds to ninth lens L9. Lens 11 to lens 13 correspond to eleventh lens L11 to thirteenth lens L13, respectively.

Lens group 1 of data 14 corresponds to first lens L1, lens group 2 corresponds to second lens L2 to fifth lens L5, and lens group 3 corresponds to sixth lens L6, seventh lens L7, eighteenth lens L18, and ninth lens L9. Lens group 4 corresponds to eleventh lens L11 to thirteenth lens L13.

[Data 10]

Surface data

| Surface number | r | d | nd | vd | effective diameter |
|---|---|---|---|---|---|
| Image display element | | ∞ | | | |
| 1 | ∞ | 15.00000 | 1.51680 | 64.2 | |
| 2 | ∞ | 12.46900 | | | |
| 3* | 16.60900 | 8.00000 | 1.59349 | 67.0 | |

(continued)

| Surface number | r | d | nd | vd | effective diameter |
|---|---|---|---|---|---|
| 4* | 238.82100 | variable | | | 15.490 |
| 5 | 15.08000 | 1.50000 | 2.00069 | 25.5 | |
| 6 | 8.82500 | 5.31000 | 1.49700 | 81.6 | |
| 7 | -29.89700 | 1.50000 | 1.90366 | 31.3 | |
| 8 | 18.82700 | 0.50000 | | | |
| 9 | 17.07700 | 7.44700 | 1.92119 | 24.0 | 4.680 |
| 10 | -120.94700 | variable | | | |
| 11 (stop) | ∞ | 14.62800 | | | 4.382 |
| 12 | -303.76700 | 8.37600 | 1.75211 | 25.0 | |
| 13 | -46.44600 | 2.92800 | | | |
| 14 | -15.10700 | 1.00000 | 1.91082 | 35.2 | |
| 15 | -27.46200 | 4.63100 | | | |
| 16 | 37.26600 | 11.91600 | 1.63854 | 55.4 | |
| 17 | -37.26600 | 1.20000 | 1.49700 | 81.6 | |
| 18 | 90.86800 | variable | | | |
| 19 | 24.13000 | 6.09300 | 1.74400 | 44.8 | |
| 20 | 32.14500 | 9.13600 | | | |
| 21* | -65.96100 | 5.10000 | 1.68893 | 31.1 | 21.227 |
| 22* | 24.63500 | 9.98500 | | | 20.654 |
| 23* | -271.41000 | 11.80000 | 1.52500 | 70.3 | 21.801 |
| 24* | -26.13800 | | | | 21.801 |

[Data 11]

Aspherical data

Third surface

K = -2.64764E-02, A4 = 1.95203E-05, A6 = 2.77906E-08, A8 = -5.48222E-10 A10 = 1.45564E-12, A12 = 2.44601E-14, A14 = -2.53264E-16, A16 = 2.83945E-18

Fourth surface

K = -1.00000E+02, A4 = 5.09253E-05, A6 = 1.64368E-07, A8 = -2.22116E-10 A10 = -1.70214E-11, A12 = -6.77176E-15, A14 = 3.59876E-15, A16 = -1.22797E-17

Twenty-first surface

K = 4.24168E-01, A4 = 7.35890E-06, A6 = -2.63924E-07, A8 = 9.63867E-10 A10 = -1.04909E-12, A12 = -2.43452E-16, A14 = -2.45190E-19, A16 = 2.11315E-21

Twenty-second surface

K = 9.83767E-03, A4 = -4.47000E-05, A6 = 4.34712E-08, A8 = -8.91954E-12 A10 = -1.22273E-13, A12 = 9.34976E-17, A14 = 8.60890E-20, A16 = -5.31655E-22

Twenty-third surface

K = -1.11269E+02, A4 = -5.01495E-05, A6 = -2.02921E-07, A8 = 1.52178E-09 A10 = -2.49636E-12, A12 = -1.24985E-16, A14 = 1.70196E-19, A16 = 3.87907E-21

Twenty-fourth surface

K = -1.91793E-03, A4 = -1.75117E-05, A6 = -6.08590E-08, A8 = 1.03604E-10 A10 = 1.48543E-13, A12 = -1.59856E-16, A14 = -3.66014E-20, A16 = 6.50430E-22

[Data 12]

Various pieces of data

| Projection area | 80" | 100" | 50" |
|---|---|---|---|
| Focal distance | 37.9403 | 37.8961 | 38.0889 |
| d4 | 4.8310 | 4.6458 | 5.4573 |
| d10 | 4.3410 | 4.5260 | 3.7171 |
| d18 | 3.8260 | 4.0665 | 2.9391 |

[Data 13]

Single lens data

| Lens | start surface | focal distance |
|---|---|---|
| 1 | 1 | ∞ |
| 2 | 3 | 29.6789 |
| 3 | 5 | -24.1589 |
| 4 | 6 | 14.3637 |
| 5 | 7 | -12.5997 |
| 6 | 9 | 16.6758 |
| 7 | 12 | 71.8962 |
| 8 | 14 | -38.3461 |
| 9 | 16 | 31.1194 |
| 10 | 17 | -53.0099 |
| 11 | 19 | 98.2208 |
| 12 | 21 | -25.4504 |
| 13 | 23 | 54.1942 |

[Data 14]

Lens group data

| Group | start surface | focal distance | lens configuration length | front-side principal point position | rear-side principal point position |
|---|---|---|---|---|---|
| 1 | 1 | 29.67893 | 35.46900 | 21.98797 | 30.14473 |
| 2 | 5 | 75.48370 | 16.25700 | 3.10935 | 9.06057 |
| 3 | 11 | 213.83645 | 44.67900 | 33.85084 | 43.49828 |
| 4 | 19 | 834.01525 | 42.11400 | 161.64749 | 183.52380 |

Transmission optical system 110 of Numerical Examples 4 to 11 below corresponds to transmission optical system 110 of the fourth exemplary embodiment (FIG. 5). Transmission optical system 110 of Numerical Examples 12 to 19 corresponds to transmission optical system 110 of a modification of the fourth exemplary embodiment. In Numerical Examples 4 to 19, transmission element 140 is disposed between reflection optical system 120 and screen 1.

Because the lens data of transmission optical system 110 of Numerical Examples 4 to 7 is similar to that of Numerical Example 1, the description is omitted. Data 15 below illustrates the lens data of transmission element 140 of Numerical Examples 4 to 7.

Surface number 1 of data 15 indicates the incident surface of transmission element 140. Surface number 2 indicates the output surface of transmission element 140.

[Data 15]

Surface data

| Surface number | X-curvature radius | Y-curvature radius | d | Nd | Vd |
|---|---|---|---|---|---|
| 1 | -198 | ∞ | 2.0 | 1.5168 | 64.2 |
| 2 | -200 | ∞ | | | |

(Numerical Example 4)

In Numerical Example 4, transmission element 140 is disposed while inclined by an angle of 70 degrees with respect to the direction orthogonal to the display surface of image display element 130.

FIG. 7 illustrates the result. A vertical axis of the graph in FIG. 7 indicates an angle (incident angle) of principal ray L incident on reference vertical intersecting line BL of transmission element 140. A horizontal axis of the graph in FIG. 7 indicates relative position (Yp) on screen 1 of principal ray L incident on reference vertical intersecting line BL. The position of the relative position of 0 indicates the position of principal ray L incident on the position closest to the final output surface of projection optical system 100 in the projection image projected onto screen 1. The position of the relative position of 1 indicates the position of light beam incident on the position farthest from the final output surface of projection optical system 100 in the projection image projected onto screen 1. In other words, the position on screen 1 at which the light beam output from the lowest portion in the Y-axis direction of FIG. 5 in the light beams output from image display element 130 arrives becomes 0, and the position on screen 1 at which the light beam output from the highest portion arrives becomes 1.

As illustrated in FIG. 7, in Numerical Example 4, the incident angle of principal ray L arriving at the relative position of 0.7 on screen 1 on reference vertical intersecting line BL of transmission element 140 becomes 0. In the incident angle of principal ray L incident on reference vertical intersecting line BL, the largest incident angle is 50 degrees as can be seen from FIG. 7.

(Numerical Example 5)

In Numerical Example 5, transmission element 140 is disposed while inclined by the angle of 60 degrees with respect to the direction orthogonal to the surface of image display element 130. Resultantly, as illustrated in FIG. 8, in Numerical Example 5, the incident angle of principal ray L arriving at the relative position of 0.4 on screen 1 on reference vertical intersecting line BL of transmission element 140 becomes 0. In the incident angle of principal ray L incident on reference vertical intersecting line BL, the largest incident angle is 40 degrees as can be seen from FIG. 8.

(Numerical Example 6)

In Numerical Example 6, transmission element 140 is disposed while inclined by the angle of 50 degrees with respect to the direction orthogonal to the surface of image display element 130. Resultantly, as illustrated in FIG. 9, in Numerical Example 6, the incident angle of principal ray L arriving at the relative position of 0.25 on screen 1 on reference vertical intersecting line BL of transmission element 140 becomes 0. In the incident angle of principal ray L incident on reference vertical intersecting line BL, the largest incident angle is 30 degrees as can be seen from FIG. 9.

(Numerical Example 7)

In Numerical Example 7, transmission element 140 is disposed while inclined by the angle of 40 degrees with respect to the direction orthogonal to the surface of image display element 130. Resultantly, as illustrated in FIG. 10, in Numerical Example 7, the incident angle of principal ray L arriving at the relative position of 0.12 on screen 1 on reference vertical intersecting line BL of transmission element 140 becomes 0. In the incident angle of principal ray L incident on reference vertical intersecting line BL, the largest incident angle is 35 degrees as can be seen from FIG. 10.

Because the lens data of transmission optical system 110 of Numerical Examples 8 to 11 is similar to that of Numerical Example 1, the description is omitted. Data 16 below illustrates the lens data of transmission element 140 of Numerical Examples 8 to 11.

Surface number 1 of data 16 indicates the incident surface of transmission element 140. Surface number 2 indicates the output surface of transmission element 140.

[Data 16]

Surface data

| Surface number | X-curvature radius | Y-curvature radius | d | Nd | Vd |
|---|---|---|---|---|---|
| 1 | -248 | -298 | 2.0 | 1.5168 | 64.2 |
| 2 | -250 | -300 | | | |

(Numerical Example 8)

In Numerical Example 8, transmission element 140 is disposed while inclined by the angle of 70 degrees with respect to the direction orthogonal to the surface of image display element 130. Resultantly, as illustrated in FIG. 11, in Numerical Example 8, the incident angle of principal ray L arriving at the relative position of 0.8 on screen 1 on reference vertical intersecting line BL of transmission element 140 becomes 0. In the incident angle of principal ray L incident on reference vertical intersecting line BL, the largest incident angle is 47 degrees as can be seen from FIG. 11.

(Numerical Example 9)

In Numerical Example 9, transmission element 140 is disposed while inclined by the angle of 60 degrees with respect to the direction orthogonal to the surface of image display element 130. Resultantly, as illustrated in FIG. 12, in Numerical Example 9, the incident angle of principal ray L arriving at the relative position of 0.46 on screen 1 on reference vertical intersecting line BL of transmission element 140 becomes 0. In the incident angle of principal ray L incident on reference vertical intersecting line BL, the largest incident angle is 38 degrees as can be seen from FIG. 12.

(Numerical Example 10)

In Numerical Example 10, transmission element 140 is disposed while inclined by the angle of 50 degrees with respect to the direction orthogonal to the surface of image display element 130. Resultantly, as illustrated in FIG. 13, in Numerical Example 10, the incident angle of principal ray L arriving at the relative position of 0.27 on screen 1 on reference vertical intersecting line BL of transmission element 140 becomes 0. In the incident angle of principal ray L incident on reference vertical intersecting line BL, the largest incident angle is 27 degrees as can be seen from FIG. 13.

(Numerical Example 11)

In Numerical Example 11, transmission element 140 is disposed while inclined by the angle of 40 degrees with respect to the direction orthogonal to the surface of image display element 130. Resultantly, as illustrated in FIG. 14, in Numerical Example 11, the incident angle of principal ray L arriving at the relative position of 0.15 on screen 1 on reference vertical intersecting line BL of transmission element 140 becomes 0. In the incident angle of principal ray L incident on reference vertical intersecting line BL, the largest incident angle is 34 degrees as can be seen from FIG. 14.

Numerical Examples 12 to 15 will be described below. Numerical Examples 12 to 15 correspond to a modification of the fourth exemplary embodiment. Because the lens data of transmission optical system 110 of Numerical Examples 12 to 15 is similar to that of Numerical Example 1, the description is omitted. Data 17 below illustrates the lens data of transmission element 140 of Numerical Examples 12 to 15.

Surface number 1 of data 17 indicates the incident surface of transmission element 140. Surface number 2 indicates the output surface of transmission element 140.

[Data 17]

Surface data

| Surface number | X-curvature radius | Y-curvature radius | d | Nd | Vd |
|---|---|---|---|---|---|
| 1 | -113 | ∞ | 2.0 | 1.5168 | 64.2 |
| 2 | -115 | ∞ | | | |

In Numerical Examples 12 to 15, first mirror 121 and second mirror 122 are reversely disposed. That is, second mirror 122 in which the reflection surface is the free curved surface is disposed closer to image display element 130 than first mirror 121 in which the reflection surface is the flat surface is.

(Numerical Example 12)

In Numerical Example 12, transmission element 140 is disposed while inclined by the angle of 70 degrees with respect to the direction orthogonal to the surface of image display element 130. Resultantly, as illustrated in FIG. 15, in Numerical Example 12, the incident angle of principal ray L arriving at the relative position of 0.08 on screen 1 on reference vertical intersecting line BL of transmission element 140 becomes 0. In the incident angle of principal ray L incident on reference vertical intersecting line BL, the largest incident angle is 32 degrees as can be seen from FIG. 15.

(Numerical Example 13)

In Numerical Example 13, transmission element 140 is disposed while inclined by the angle of 60 degrees with respect to the direction orthogonal to the surface of image display element 130. Resultantly, as illustrated in FIG. 16, in Numerical Example 13, the incident angle of principal ray L arriving at the relative position of 0.2 on screen 1 on reference vertical intersecting line BL of transmission element 140 becomes 0. In the incident angle of principal ray L incident on reference vertical intersecting line BL, the largest incident angle is 21 degrees as can be seen from FIG. 16.

(Numerical Example 14)

In Numerical Example 14, transmission element 140 is disposed while inclined by the angle of 50 degrees with respect to the direction orthogonal to the surface of image display element 130. Resultantly, as illustrated in FIG. 17, in Numerical Example 14, the incident angle of principal ray L arriving at the relative position of 0.46 on screen 1 on reference vertical intersecting line BL of transmission element 140 becomes 0. In the incident angle of principal ray L incident on reference vertical intersecting line BL, the largest incident angle is 31 degrees as can be seen from FIG. 17.

(Numerical Example 15)

In Numerical Example 15, transmission element 140 is disposed while inclined by the angle of 40 degrees with respect to the direction orthogonal to the surface of image display element 130. Resultantly, as illustrated in FIG. 18, in Numerical Example 15, the incident angle of principal ray L arriving at the relative position of 0.92 on screen 1 on reference vertical intersecting line BL of transmission element 140 becomes 0. In the incident angle of principal ray L incident on reference vertical intersecting line BL, the largest incident angle is 41 degrees as can be seen from FIG. 18.

Numerical Examples 16 to 19 will be described below. Numerical Examples 16 to 19 correspond to a modification of the fourth exemplary embodiment. Because the lens data of transmission optical system 110 of Numerical Examples 16 to 19 is similar to that of Numerical Example 1, the description is omitted. Data 18 below illustrates the lens data of transmission element 140 of Numerical Examples 16 to 19.

Surface number 1 of data 18 indicates the incident surface of transmission element 140. Surface number 2 indicates the output surface of transmission element 140.

[Data 18]

Surface data

| Surface number | X-curvature radius | Y-curvature radius | d | Nd | Vd |
|---|---|---|---|---|---|
| 1 | -113 | ∞ | 2.0 | 1.5168 | 64.2 |
| 2 | -115 | ∞ | | | |

In the following Numerical Examples 16 to 19, first mirror 121 that is the flat mirror is not used, but only second mirror 122 is used.

(Numerical Example 16)

In Numerical Example 16, transmission element 140 is disposed while inclined by the angle of 70 degrees with respect to the direction orthogonal to the surface of image display element 130. Resultantly, as illustrated in FIG. 19, in Numerical Example 16, the incident angle of principal ray L arriving at the relative position of 0.04 on screen 1 on reference vertical intersecting line BL of transmission element 140 becomes 0. In the incident angle of principal ray L incident on reference vertical intersecting line BL, the largest incident angle is 36 degrees as can be seen from FIG. 19.

(Numerical Example 17)

In Numerical Example 17, transmission element 140 is disposed while inclined by the angle of 60 degrees with respect to the direction orthogonal to the surface of image display element 130. Resultantly, as illustrated in FIG. 20, in Numerical Example 17, the incident angle of principal ray L arriving at the relative position of 0.16 on screen 1 on reference vertical intersecting line BL of transmission element 140 becomes 0. In the incident angle of principal ray L incident on reference vertical intersecting line BL, the largest incident angle is 26 degrees as can be seen from FIG. 20.

(Numerical Example 18)

In Numerical Example 18, transmission element 140 is disposed while inclined by the angle of 50 degrees with respect to the direction orthogonal to the surface of image display element 130. Resultantly, as illustrated in FIG. 21, in Numerical Example 18, the incident angle of principal ray L arriving at the relative position of 0.32 on screen 1 on reference vertical intersecting line BL of transmission element 140 becomes 0. In the incident angle of principal ray L incident on reference vertical intersecting line BL, the largest incident angle is 26 degrees as can be seen from FIG. 20.

(Numerical Example 19)

In Numerical Example 19, transmission element 140 is disposed while inclined by the angle of 40 degrees with respect to the direction orthogonal to the surface of image display element 130. Resultantly, as illustrated in FIG. 22, in Numerical Example 19, the incident angle of principal ray L arriving at the relative position of 0.62 on screen 1 on reference vertical intersecting line BL of transmission element 140 becomes 0. In the incident angle of principal ray L incident on reference vertical intersecting line BL, the largest incident angle is 36 degrees as can be seen from FIG. 19.

(Comparative Example 1)

In Comparative Example 1, in order to compare Comparative Example 1 to Numerical Examples 4 to 7, transmission element 140 is disposed while inclined by the angle of 90 degrees with respect to the direction orthogonal to the surface of image display element 130. Other configurations of projection optical system 100 of Comparative Example 1 are similar to those of Numerical Examples 4 to 7. Resultantly, as illustrated in FIG. 23, in Comparative Example 1, the incident angle of principal ray L arriving at screen 1 on reference vertical intersecting line BL of transmission element 140 does not become 0. Therefore, the largest angle becomes 70 degrees in principal ray L incident on reference vertical intersecting line BL, and is larger than that of Numerical Examples 4 o 7 as can be seen from FIG. 23.

(Comparative Example 2)

In Comparative Example 2, in order to compare Comparative Example 2 to Numerical Examples 8 to 11, transmission element 140 is disposed while inclined by the angle of 90 degrees with respect to the direction orthogonal to the surface of image display element 130. Other configurations of projection optical system 100 of Comparative Example 2 are similar to those of Numerical Examples 8 to 11. Resultantly, as illustrated in FIG. 24, in Comparative Example 2, the incident angle of principal ray L arriving at screen 1 on reference vertical intersecting line BL of transmission element 140 does not become 0. Therefore, the largest angle becomes 66 degrees in principal ray L incident on reference vertical intersecting line BL, and is larger than that of Numerical Examples 8 to 11 as can be seen from FIG. 24.

(Comparative Example 3)

In Comparative Example 3, in order to compare Comparative Example 3 to Numerical Examples 12 to 15, transmission element 140 is disposed while inclined by the angle of 90 degrees with respect to the direction orthogonal to the surface of image display element 130. Other configurations of projection optical system 100 of Comparative Example 3 are similar to those of Numerical Examples 12 to 15. Resultantly, as illustrated in FIG. 25, in Comparative Example 3, the incident angle of principal ray L arriving at screen 1 on reference vertical intersecting line BL of transmission element 140 does not become 0. In Comparative Example 3, the largest angle (maximum incident angle) becomes 42 degrees in principal ray L incident on reference vertical intersecting line BL, and is larger than the maximum incident angle of Numerical Examples 12 to 15 as can be seen from FIG. 25. As can be seen from FIG. 25, the maximum incident angle of Comparative Example 3 is markedly larger than the maximum incident angle of Numerical Examples 12 to 14 particularly satisfying the conditional expression (2).

(Comparative Example 4)

In Comparative Example 4, in order to compare Comparative Example 4 to Numerical Examples 16 to 19, transmission element 140 is disposed while inclined by the angle of 90 degrees with respect to the direction orthogonal to the surface of image display element 130. Other configurations of projection optical system 100 of Comparative Example 4 are similar to those of Numerical Examples 16 to 19. Resultantly, as illustrated in FIG. 26, in Comparative Example 4, the incident angle of principal ray L arriving at screen 1 on reference vertical intersecting line BL of transmission element 140 does not become 0. Therefore, the largest angle becomes 46 degrees in principal ray L incident on reference vertical intersecting line BL, and is larger than that of Numerical Examples 16 to 19 as can be seen from FIG. 26.

(Other exemplary embodiments)

The first to fourth exemplary embodiments have been described above as an example of the technique disclosed in the present application. However, the technique in the present disclosure is not limited thereto, and can also be applied to embodiments in which change, substitution, addition, omission and the like are performed. A new exemplary embodiment can also be made by a combination of the components described in the first to fourth exemplary embodiments.

The above exemplary embodiments are an illustration of the technique of the present disclosure. Therefore, various changes, replacements, additions, or omissions may be made to the exemplary embodiments within the scope of claims or their equivalents.

INDUSTRIAL APPLICABILITY

The present disclosure can be applied to the projection that projects the image displayed on the image display element. Specifically, the present disclosure can be applied to a projector, a head-up display, and the like.

REFERENCE MARKS IN THE DRAWINGS

| | |
|---|---|
| 1 | screen |
| 10 | image projection device |
| 100 | projection optical system |
| 110 | transmission optical system |
| 120 | reflection optical system |
| 121 | first mirror |
| 122 | second mirror |
| 130 | image display element |
| 131 | image |
| 131a | long side |
| 131b | short side |
| BO | reference intersection |
| BL | reference vertical intersecting line |
| 140 | transmission element |
| A | aperture stop |
| PB | prism |
| L1 | first lens (positive lens) |
| L2 | second lens |
| L3 | third lens (positive lens) |
| L4 | fourth lens |
| L5 | fifth lens (positive lens) |
| L6 | sixth lens |
| L7 | seventh lens |
| L8 | eighth lens |
| L9 | ninth lens |
| L10 | tenth lens |
| L11 | eleventh lens (first positive lens) |
| L12 | twelfth lens (negative lens) |
| L13 | thirteenth lens (second positive lens) |
| L18 | eighteenth lens |

## Claims

**1.** A projection optical system that magnifies and projects an image onto a projection surface from an oblique position defined by a Y-axis and a Z-axis, the image being displayed on an image display element, being defined by a positive direction of an X-axis and a positive direction of the Y-axis, and including a long side parallel to the X-axis and a short side parallel to the Y-axis when a positional relationship is expressed using an XYZ coordinate, the projection optical system comprising:

a transmission optical system that includes a lens element and magnifies the image displayed on the image display element; and
a transmission element that is disposed on an optical path between the transmission optical system and the projection surface and transmits a light beam of the image without shielding the light beam,
wherein in at least one of an incident surface on which the light beam is incident and an output surface from which the light beam is output of the transmission element,
assuming that a reference intersection is a point through which the light beam output from a center of the image passes in a principal ray, which is output from the image and passes through a center of a pupil of the transmission optical system, and

assuming that a reference vertical intersecting line is a line, which passes through the reference intersection and is parallel to a direction corresponding to the positive direction of the Y-axis,
in the one of the surfaces, a curvature with respect to a direction perpendicular to the reference vertical intersecting line is larger than a curvature with respect to a direction parallel to the reference vertical intersecting line, and
in the principal ray, the light beam incident on the reference vertical intersecting line includes the light beam parallel to a normal line of the one of the surfaces at the reference intersection.

**2.** The projection optical system according to claim 1, wherein a following condition is satisfied

$$0 < Yp < 0.9$$

where
Yp is a relative position on the projection image at which the principal ray, which passes through the reference vertical intersecting line and is parallel to the normal line, arrives when a position at an arbitrary point on a straight line, which passes through a center of a projection image projected onto the projection surface and is parallel to a short side of the projection image, is relatively expressed from 0 to 1 in a direction corresponding to the positive direction of the Y-axis of the image in the projection image.

**3.** The projection optical system according to claim 1, further comprising a reflection optical system disposed between the transmission optical system and the transmission element.

**4.** The projection optical system according to claim 1, wherein the one of the surfaces of the transmission element is one of a toroidal surface and a free curved surface, which have different curvatures in two directions orthogonal to each other.

**5.** An image projection device that magnifies and projects an image onto a projection surface from an oblique position defined by a Y-axis and a Z-axis when a positional relationship is expressed using an XYZ-coordinate, the image projection device comprising:

an image display element that displays the image, which is defined in a positive direction of an X-axis and a positive direction of the Y-axis and includes a long side parallel to the X-axis and a short side parallel to the Y-axis;
a transmission optical system that includes a lens element and magnifies the image; and
a transmission element that is disposed on an optical path between the transmission optical system and the projection surface and transmits a light beam of the image without shielding the light beam,
wherein in at least one of an incident surface on which the light beam is incident and an output surface from which the light beam is output of the transmission element,
assuming that a reference intersection is a point through which the light beam output from a center of the image passes in a principal ray, which is output from the image and passes through a center of a pupil of the transmission optical system, and
assuming that a reference vertical intersecting line is a line, which passes through the reference intersection and is parallel to a direction corresponding to the positive direction of the Y-axis,
in the one of the surfaces, a curvature with respect to a direction perpendicular to the reference vertical intersecting line is larger than a curvature with respect to a direction parallel to the reference vertical intersecting line, and
in the principal ray, the light beam incident on the reference vertical intersecting line includes the light beam parallel to a normal line of the one of the surfaces at the reference intersection.

FIG. 1

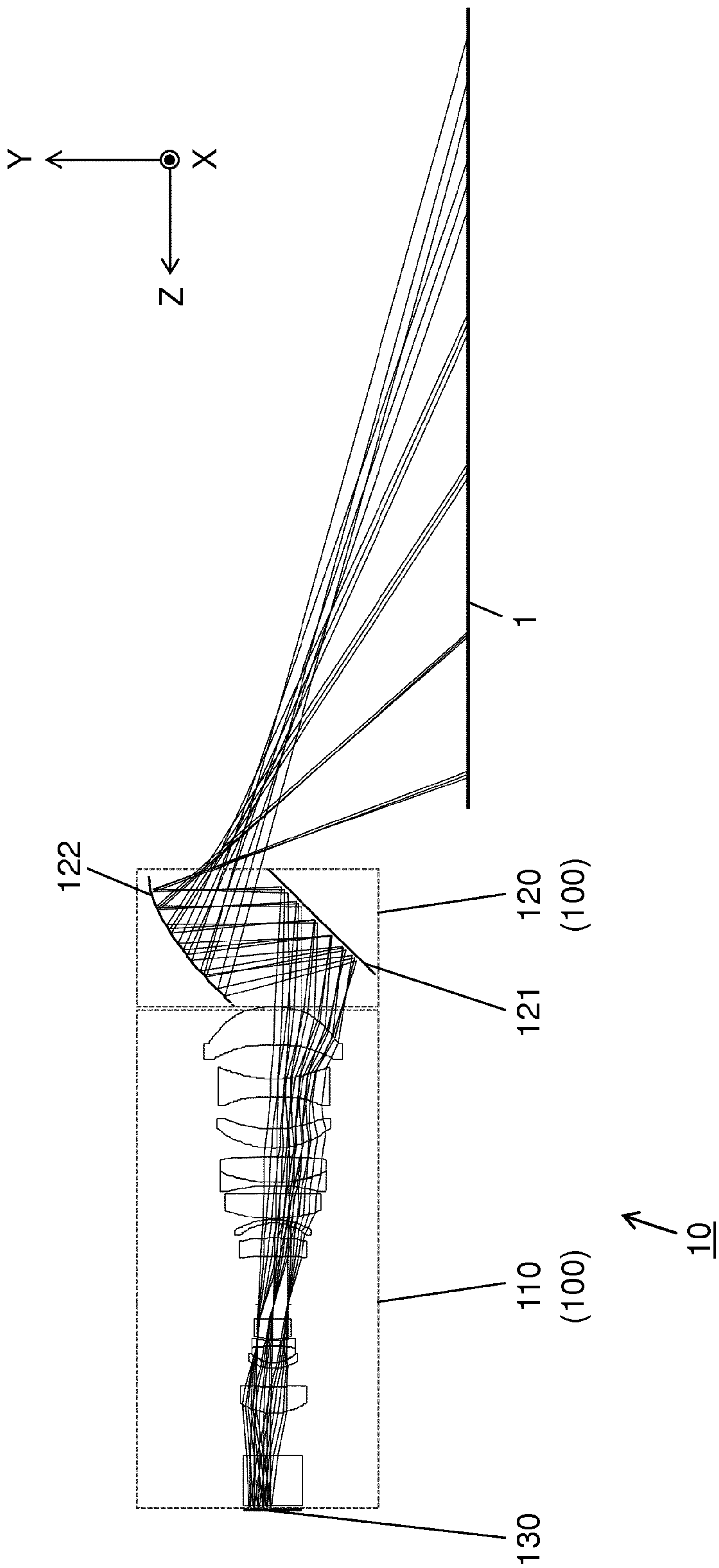

FIG. 2

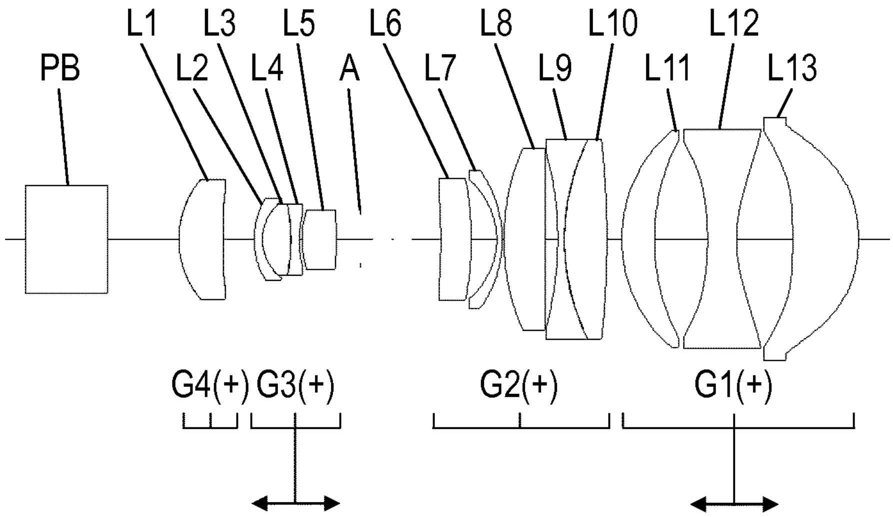
L1
L3
L5
L6
L8
L10
L12
PB
L2
L4
A
L7
L9
L11
L13
G4(+)
G3(+)
G2(+)
G1(+)

FIG. 3

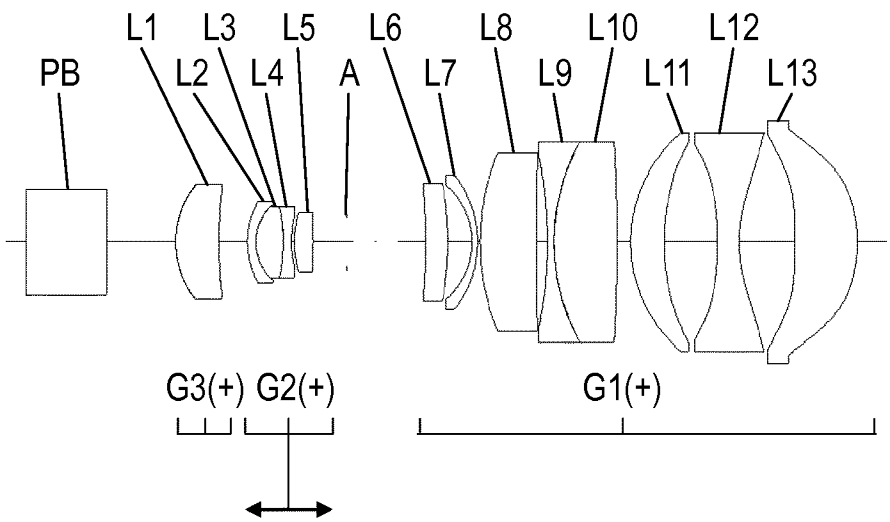
L1
L3
L5
L6
L8
L10
L12
PB
L2
L4
A
L7
L9
L11
L13
G3(+)
G2(+)
G1(+)

FIG. 4

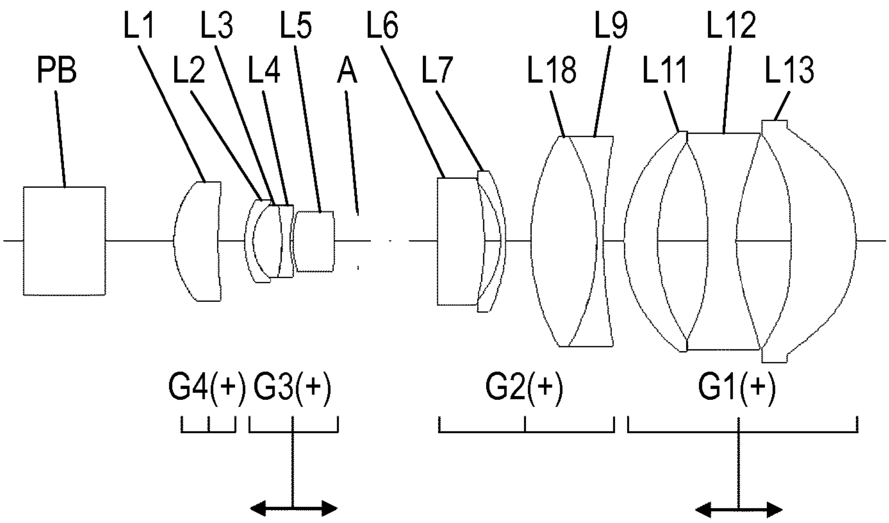

FIG. 5

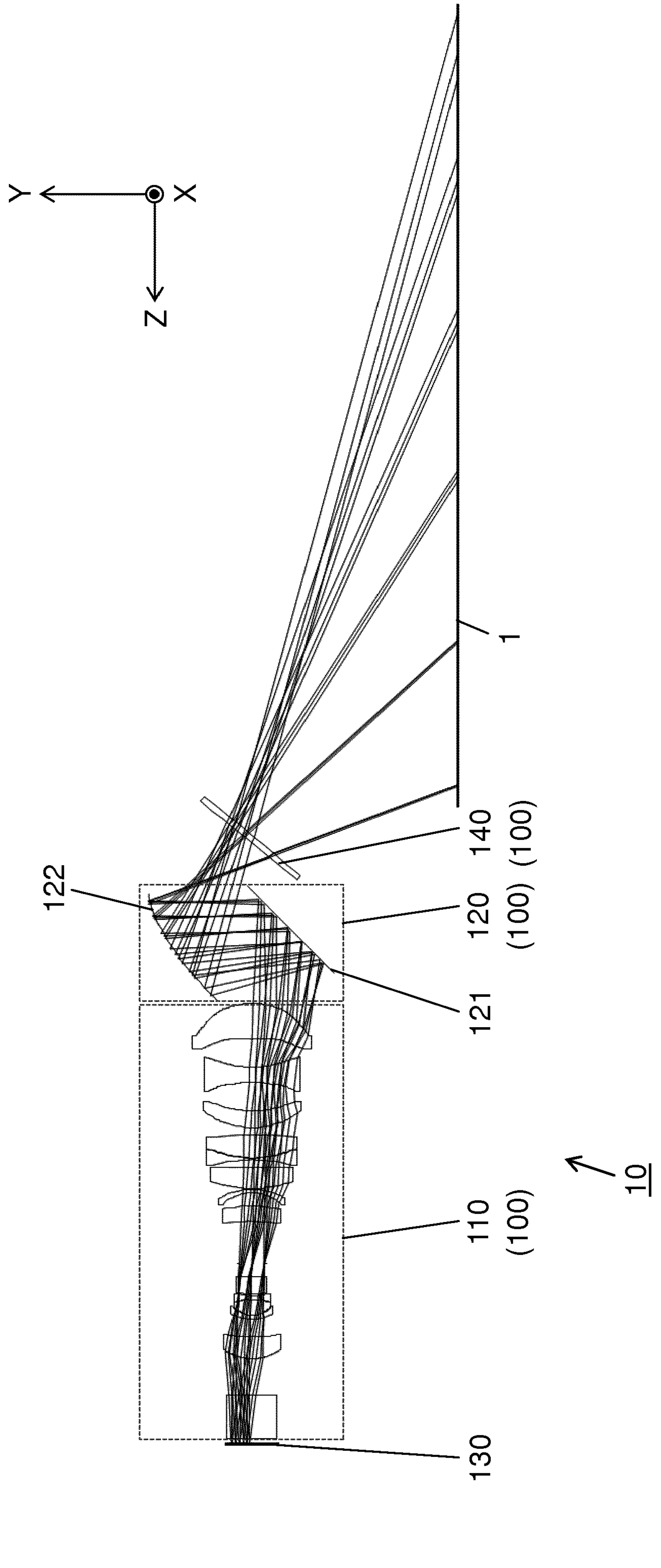

FIG. 6

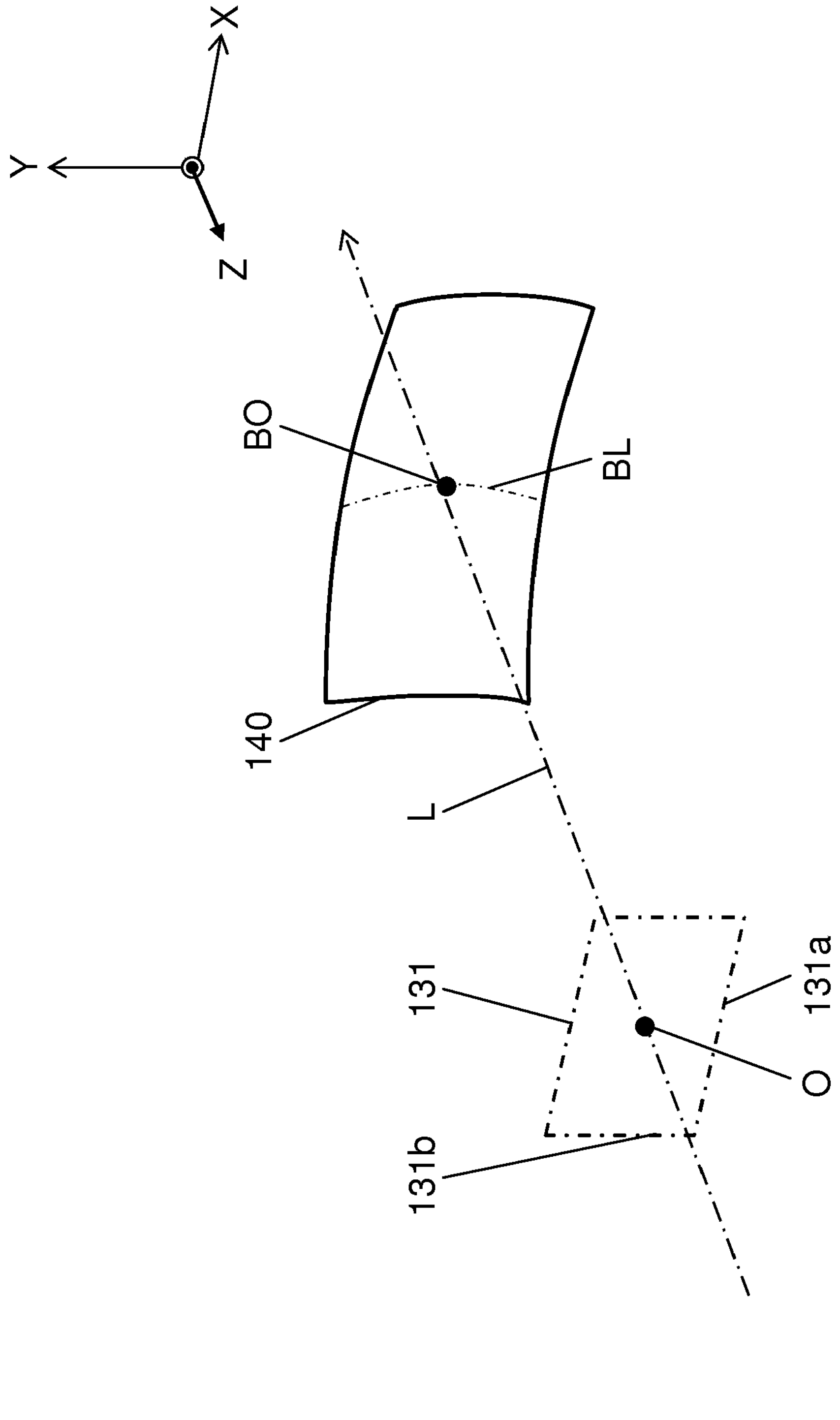

FIG. 7

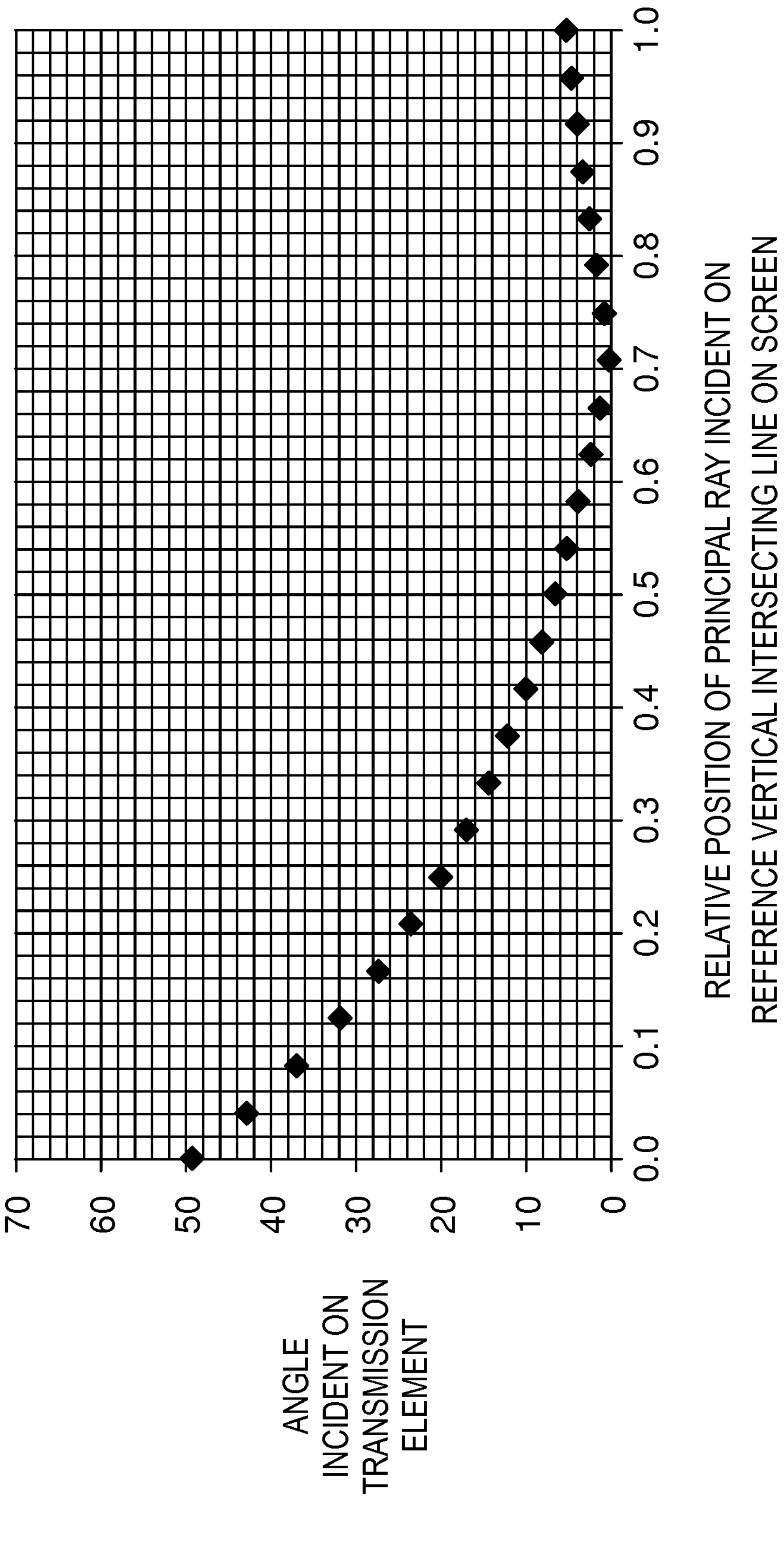
ANGLE INCIDENT ON TRANSMISSION ELEMENT
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 8

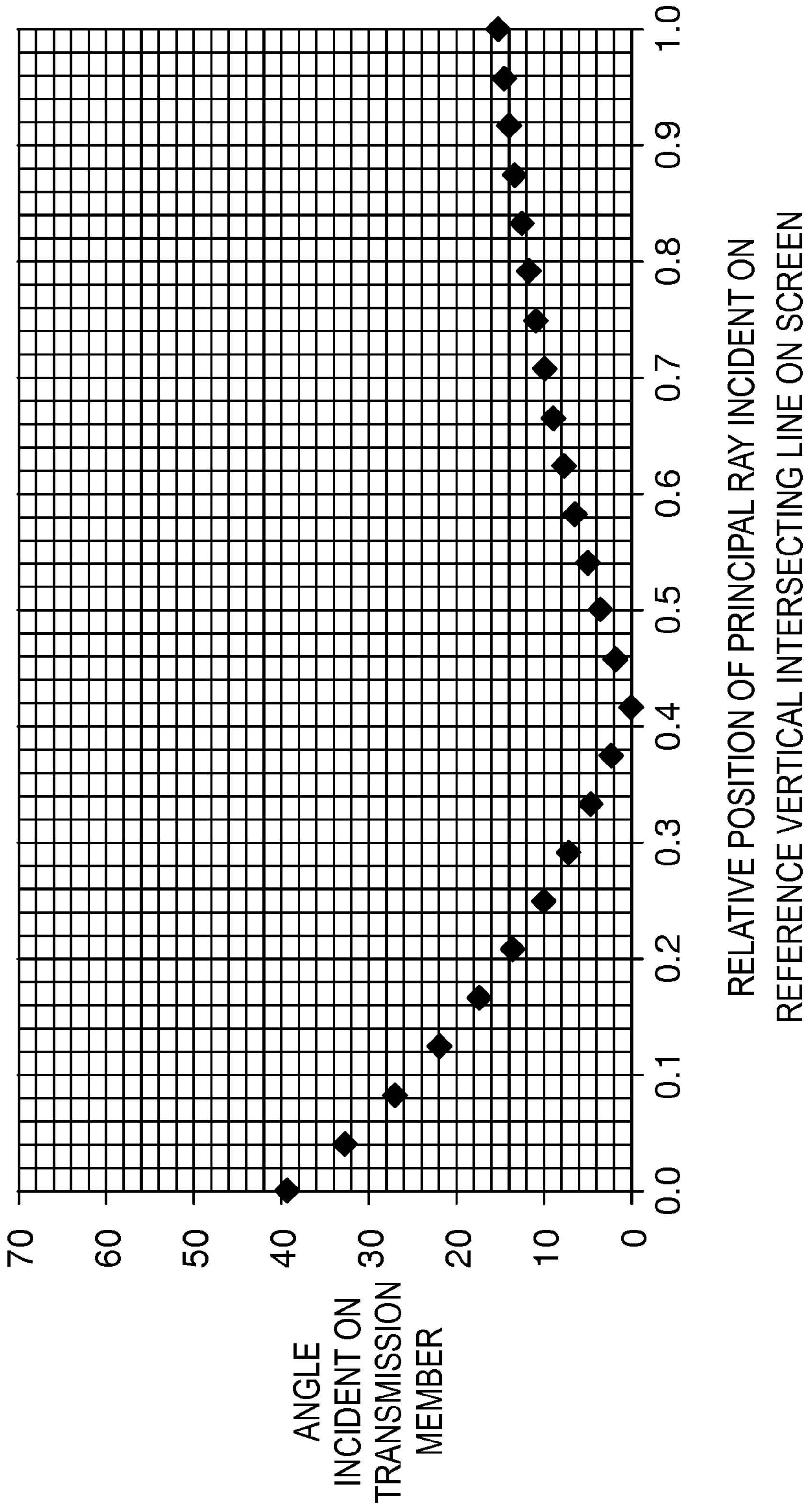
ANGLE INCIDENT ON TRANSMISSION MEMBER
0
10
20
30
40
50
60
70
RELATIVE POSITION OF PRINCIPAL RAY INCIDENT ON REFERENCE VERTICAL INTERSECTING LINE ON SCREEN
0.0
0.1
0.2
0.3
0.4
0.5
0.6
0.7
0.8
0.9
1.0

FIG. 9

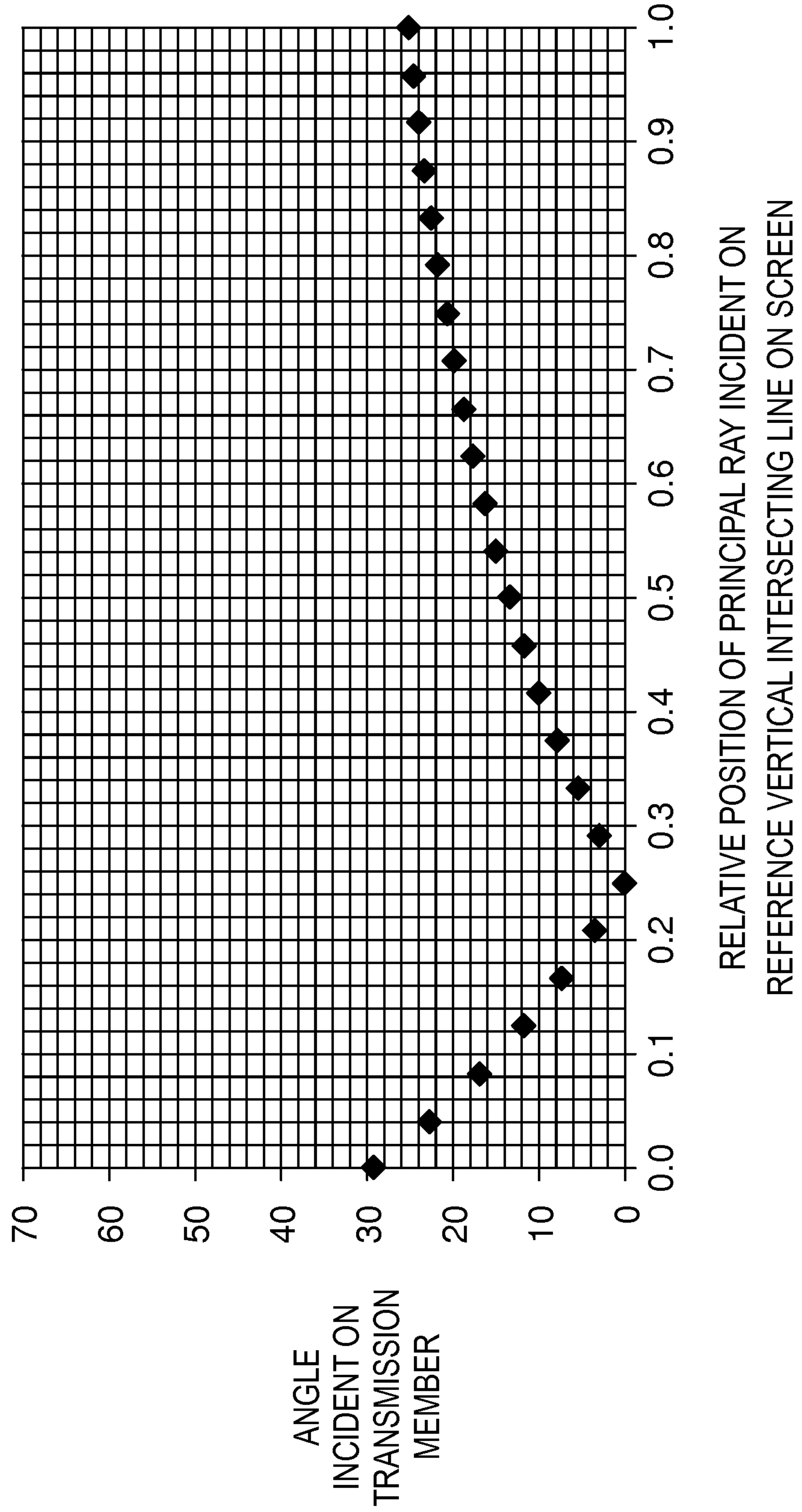

ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 10

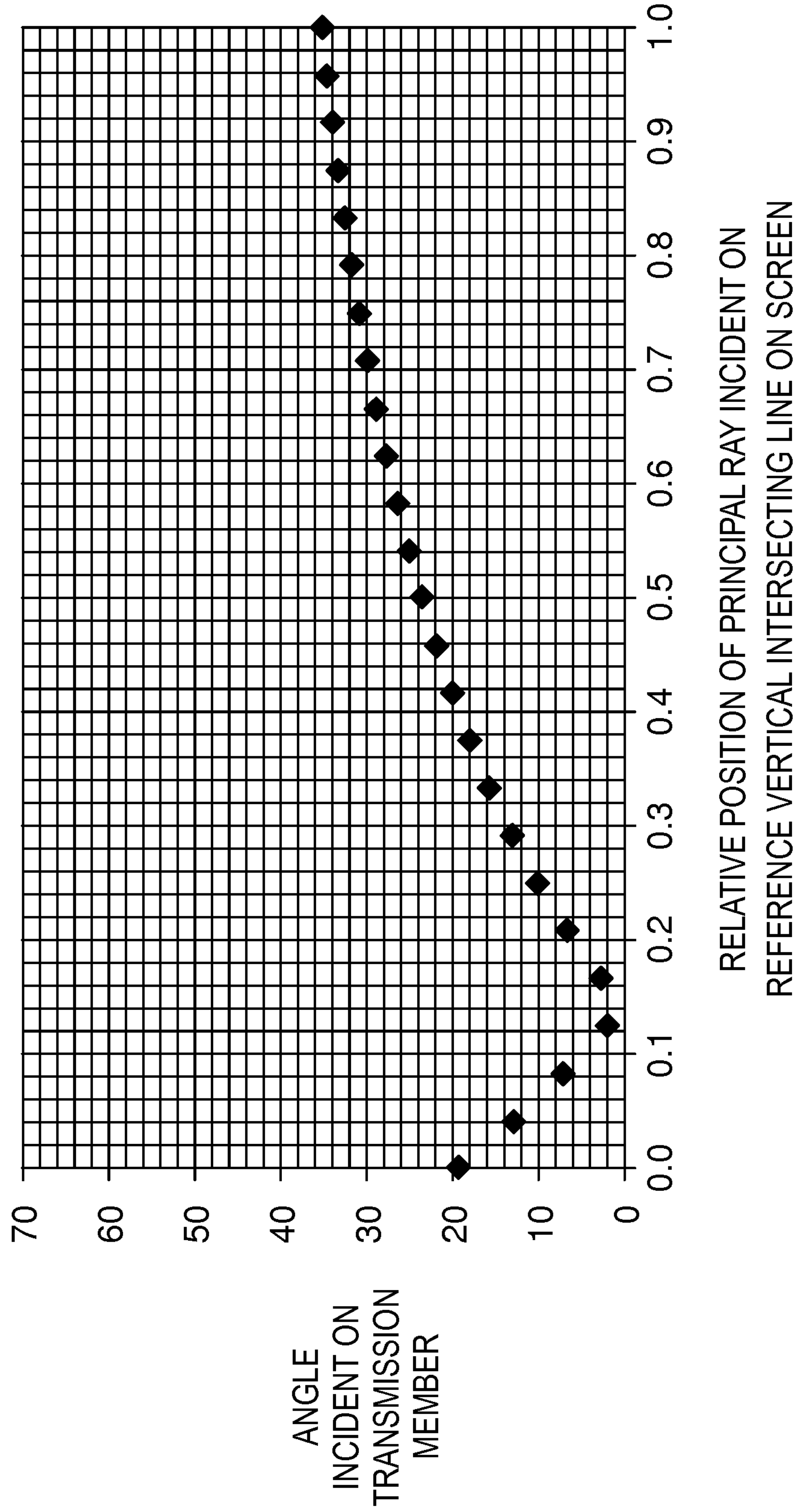
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 11

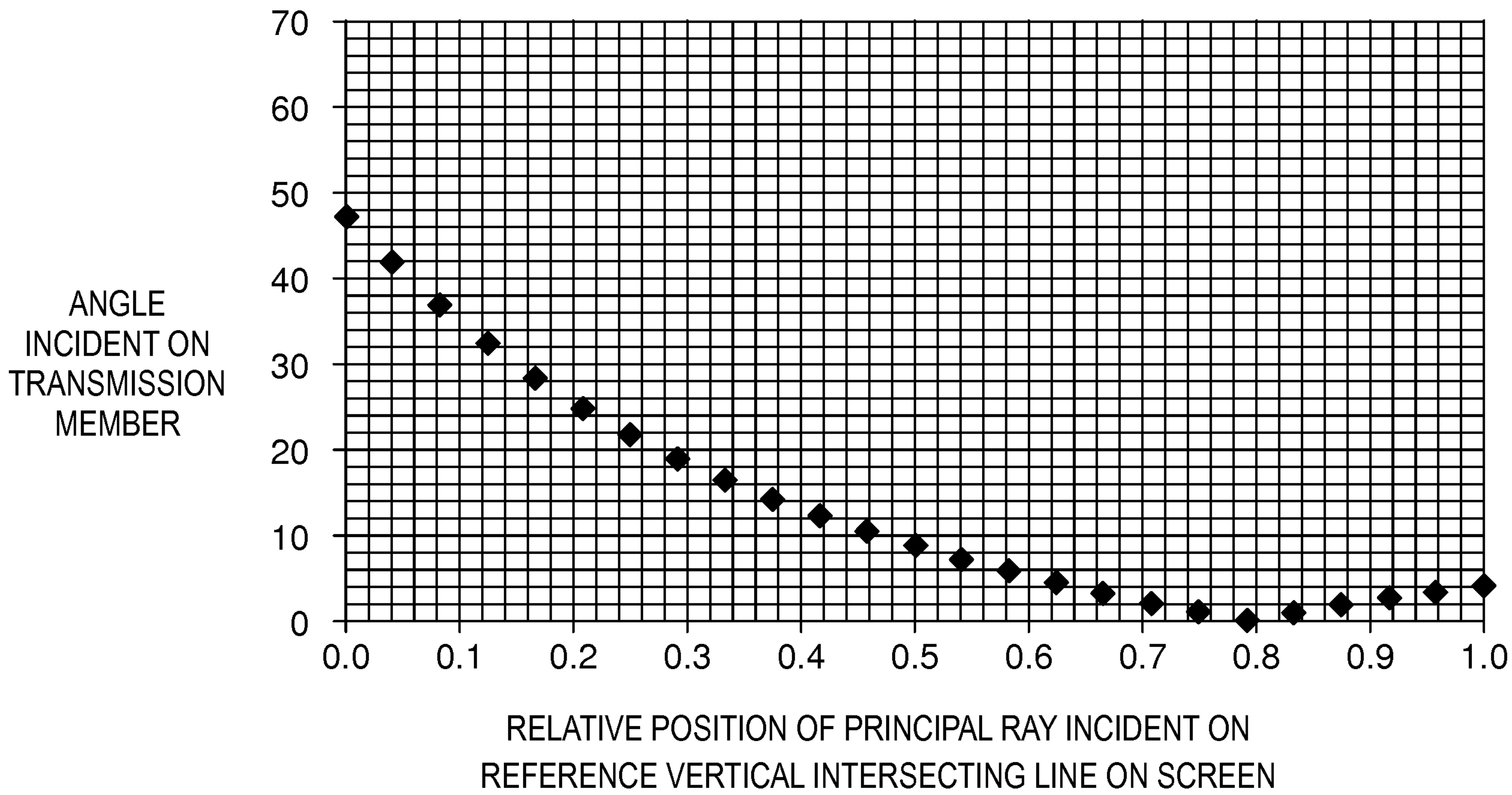
70
60
50
40
30
20
10
0
0.0
0.1
0.2
0.3
0.4
0.5
0.6
0.7
0.8
0.9
1.0
ANGLE INCIDENT ON TRANSMISSION MEMBER
RELATIVE POSITION OF PRINCIPAL RAY INCIDENT ON REFERENCE VERTICAL INTERSECTING LINE ON SCREEN

FIG. 12

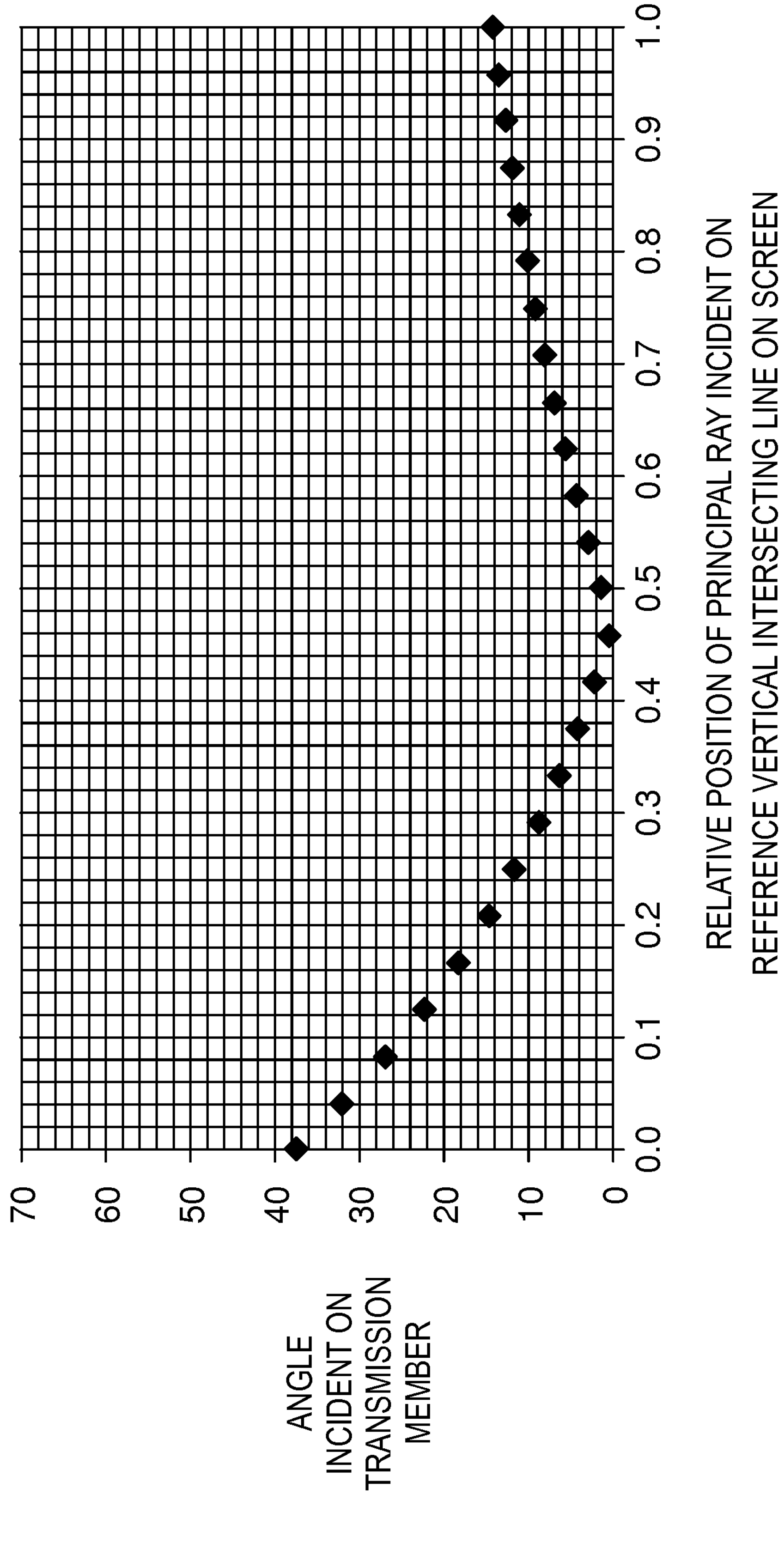
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 13

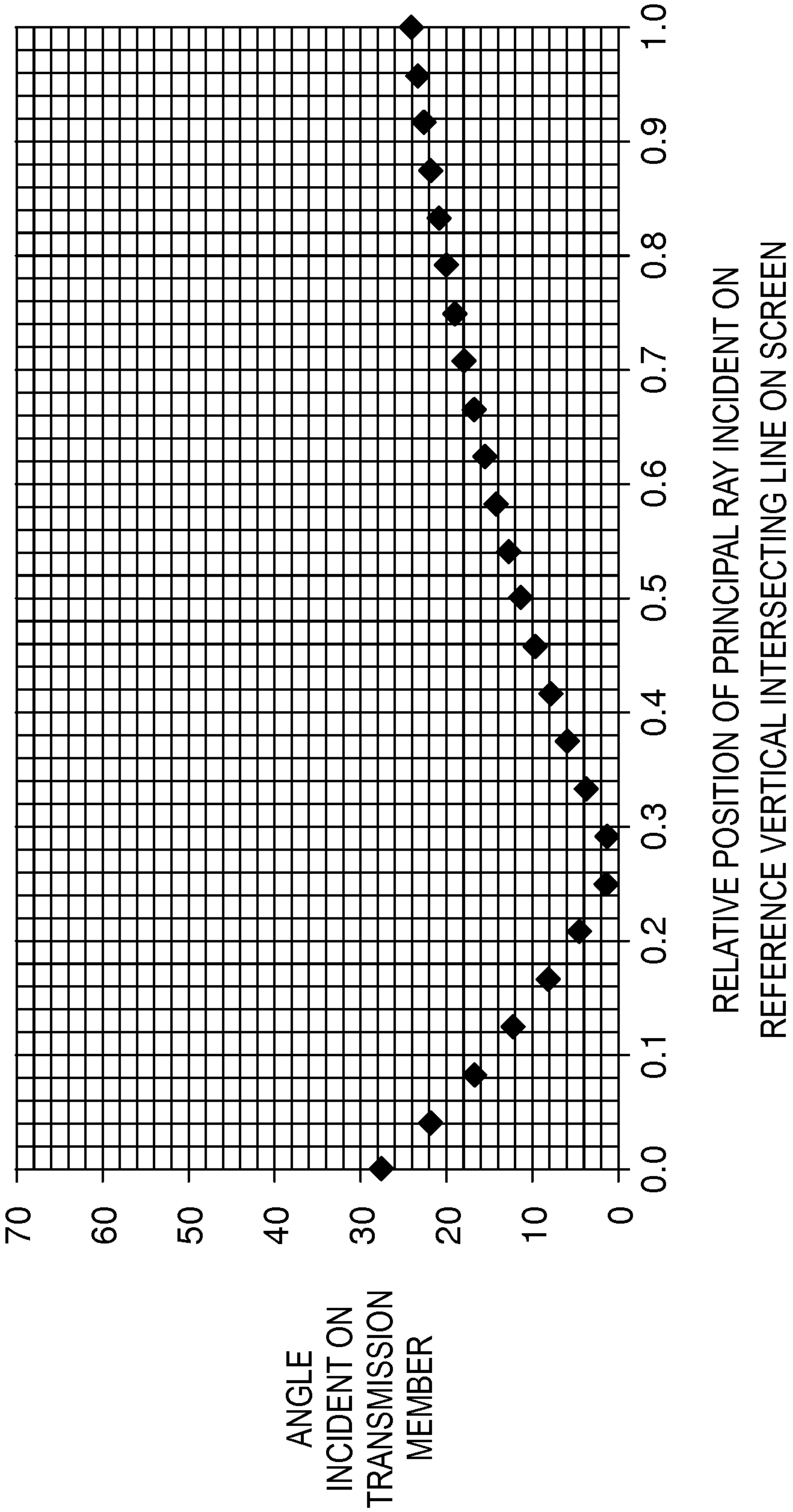
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 14

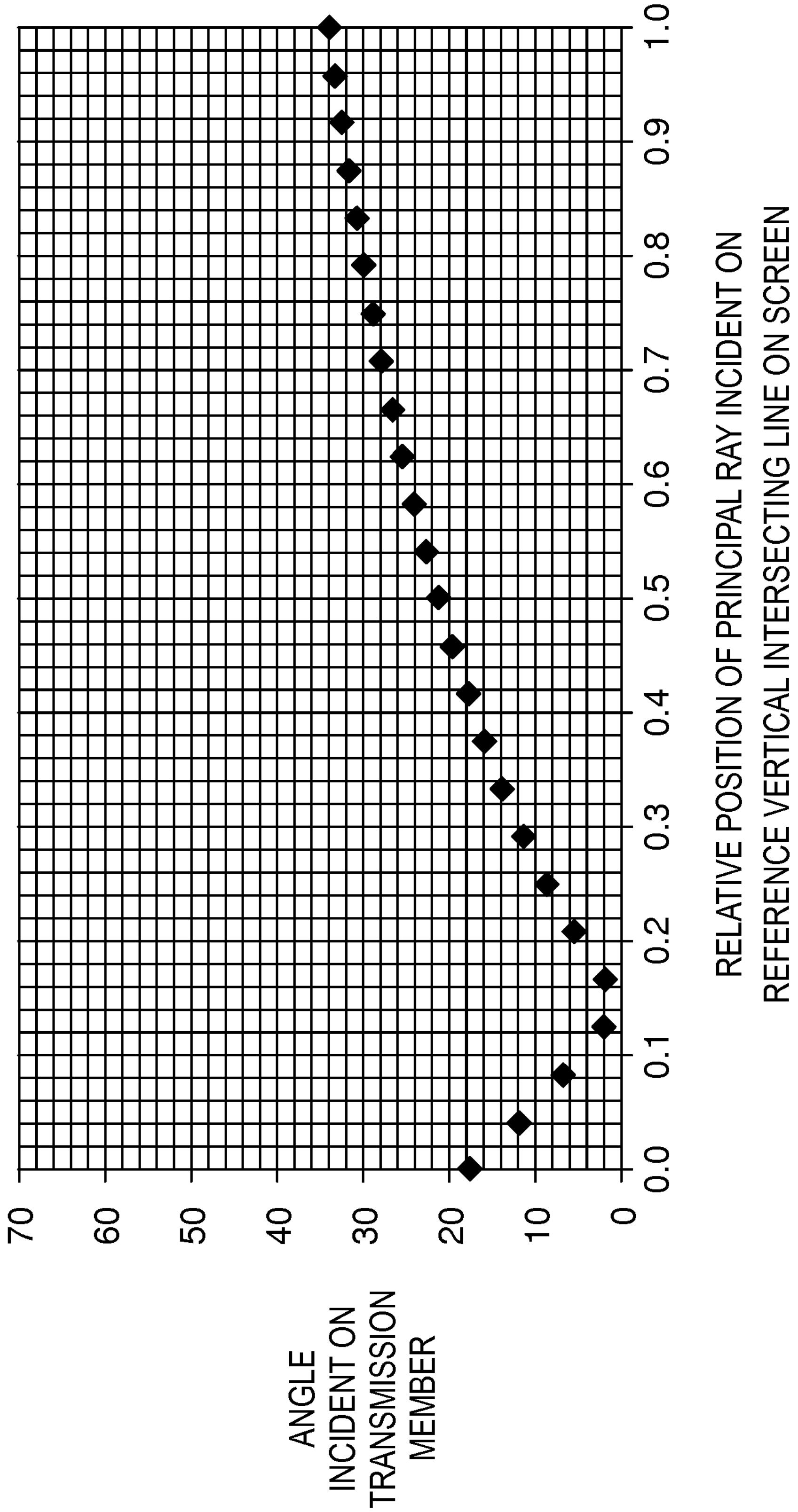
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 15

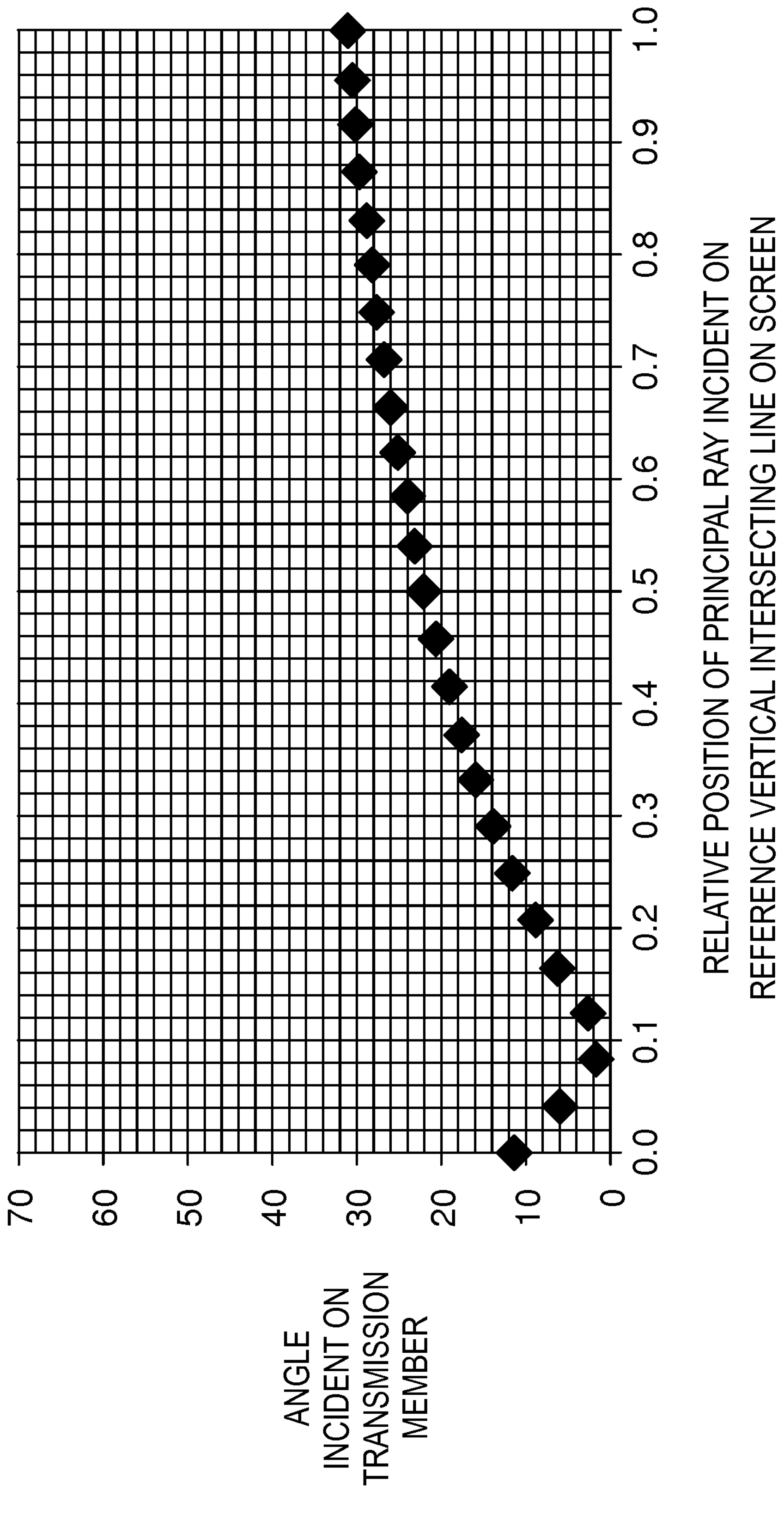

ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 16

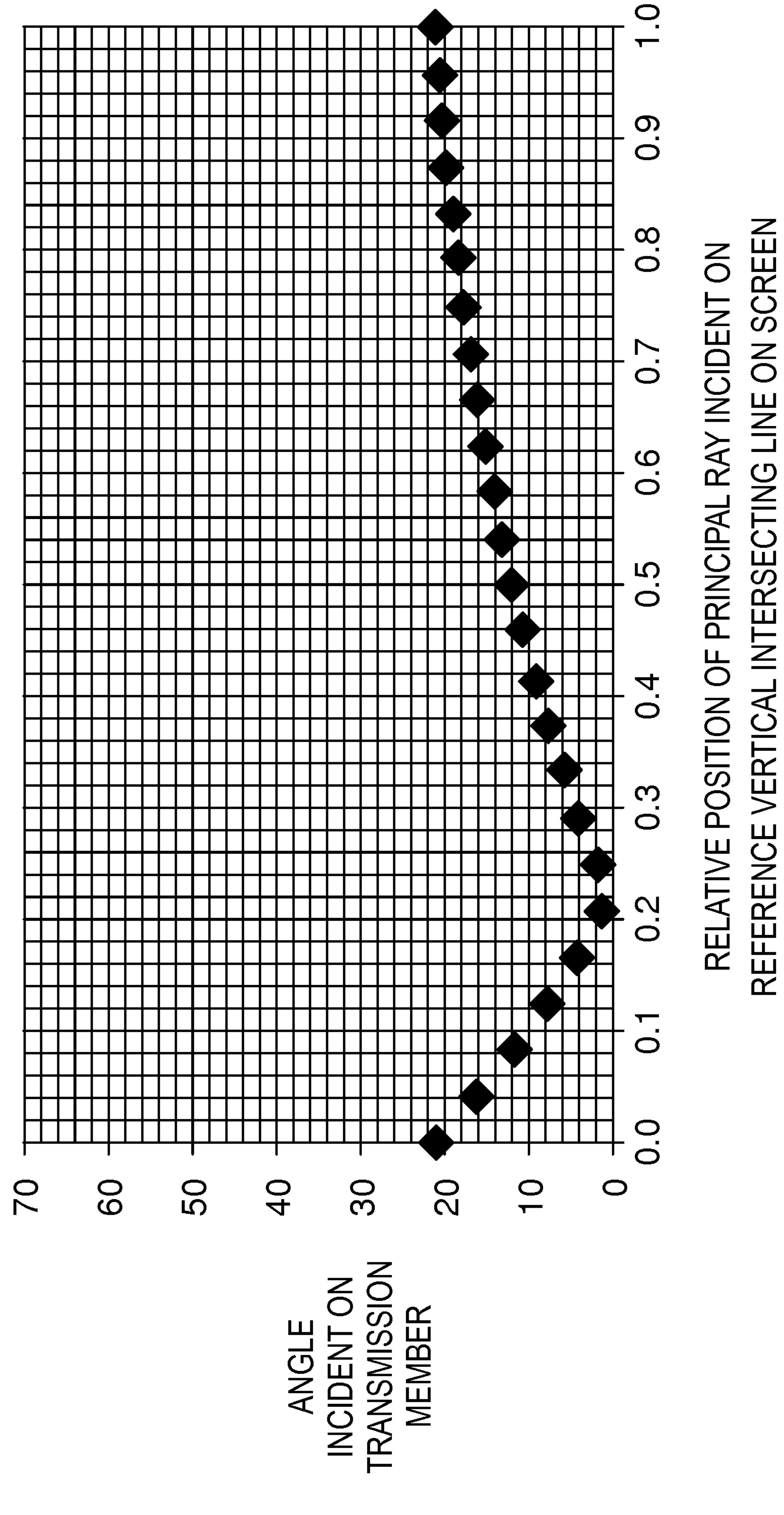
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 17

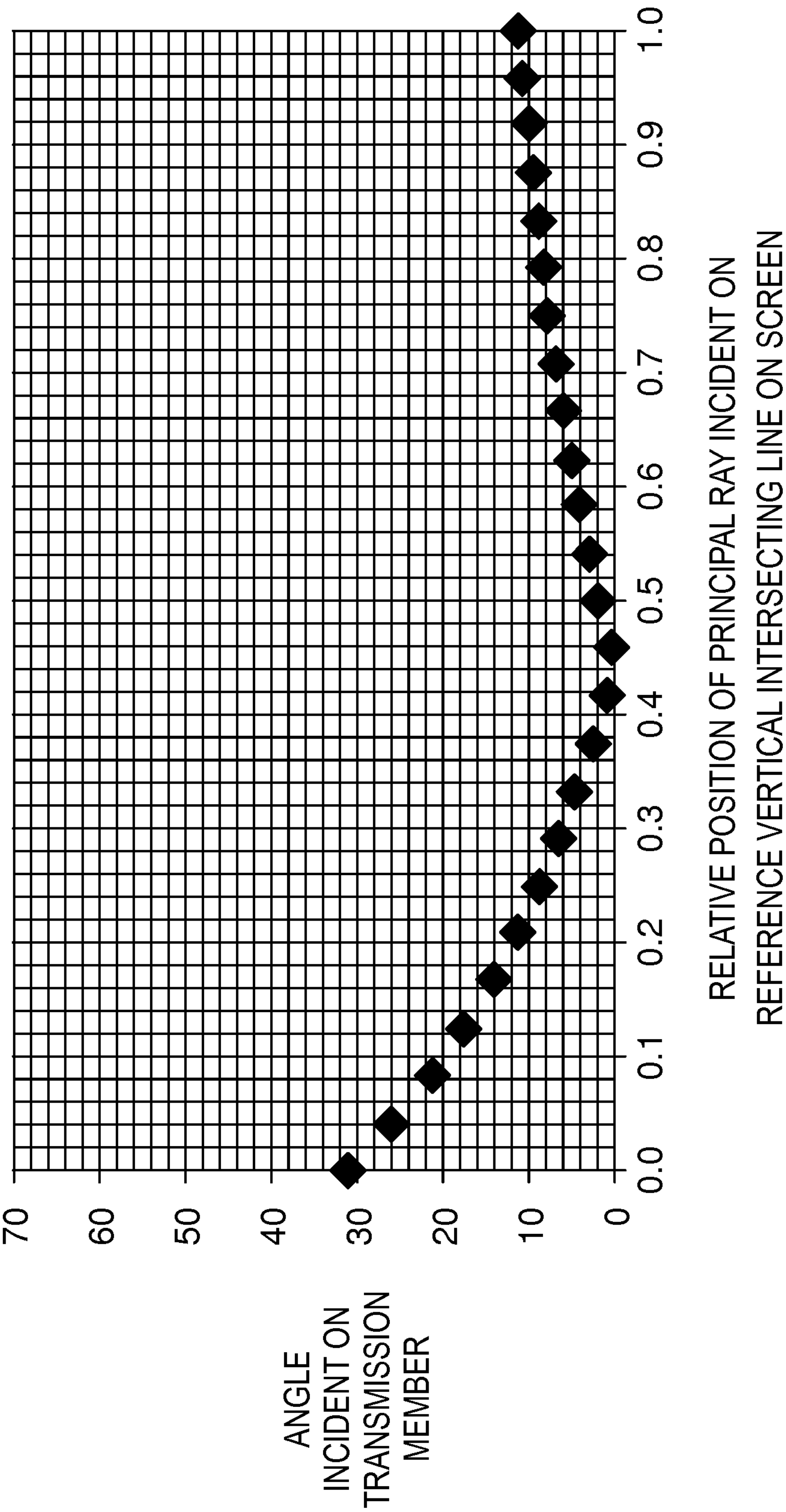
ANGLE INCIDENT ON TRANSMISSION MEMBER
0
10
20
30
40
50
60
70
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 18

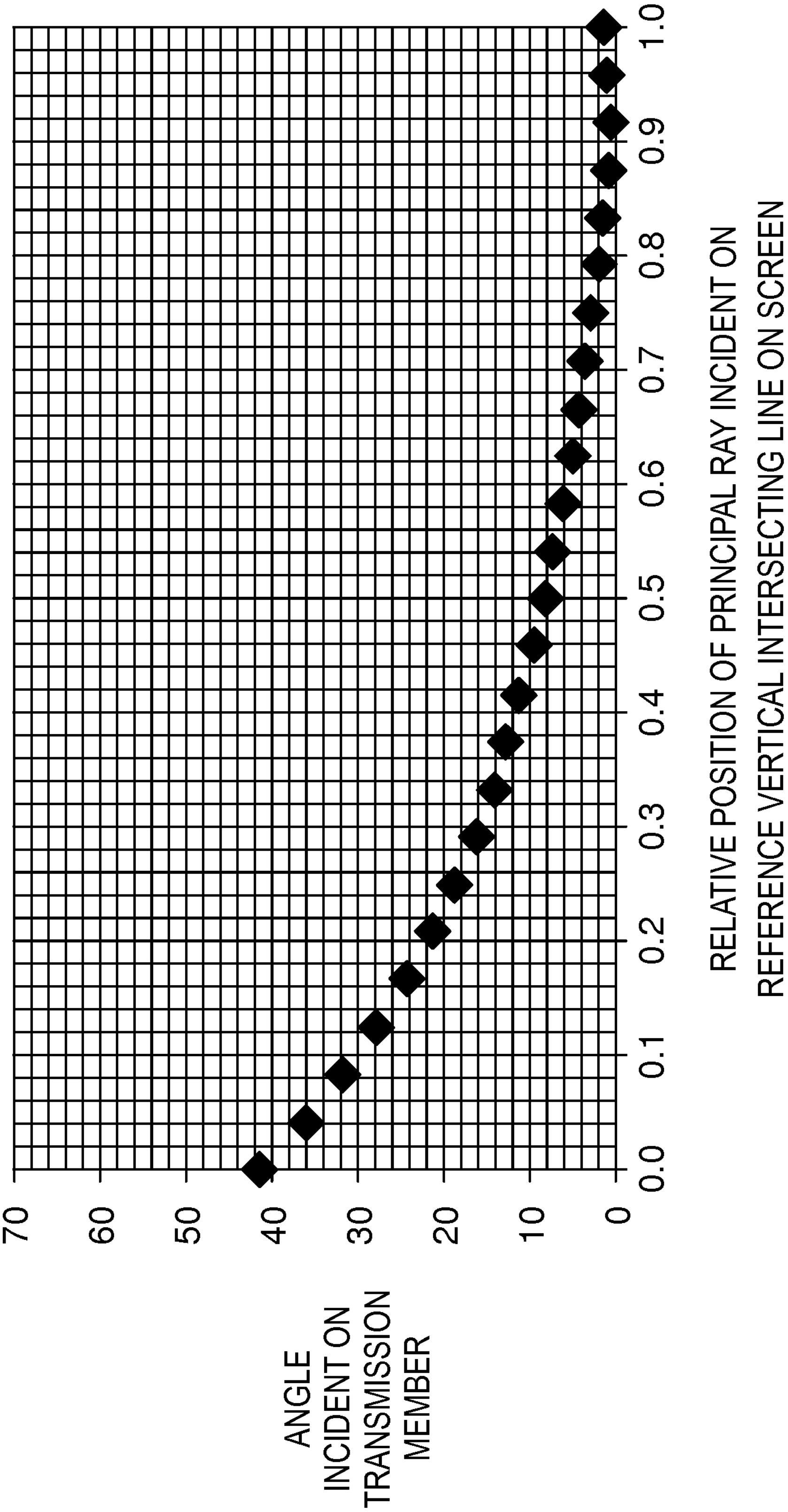
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 19

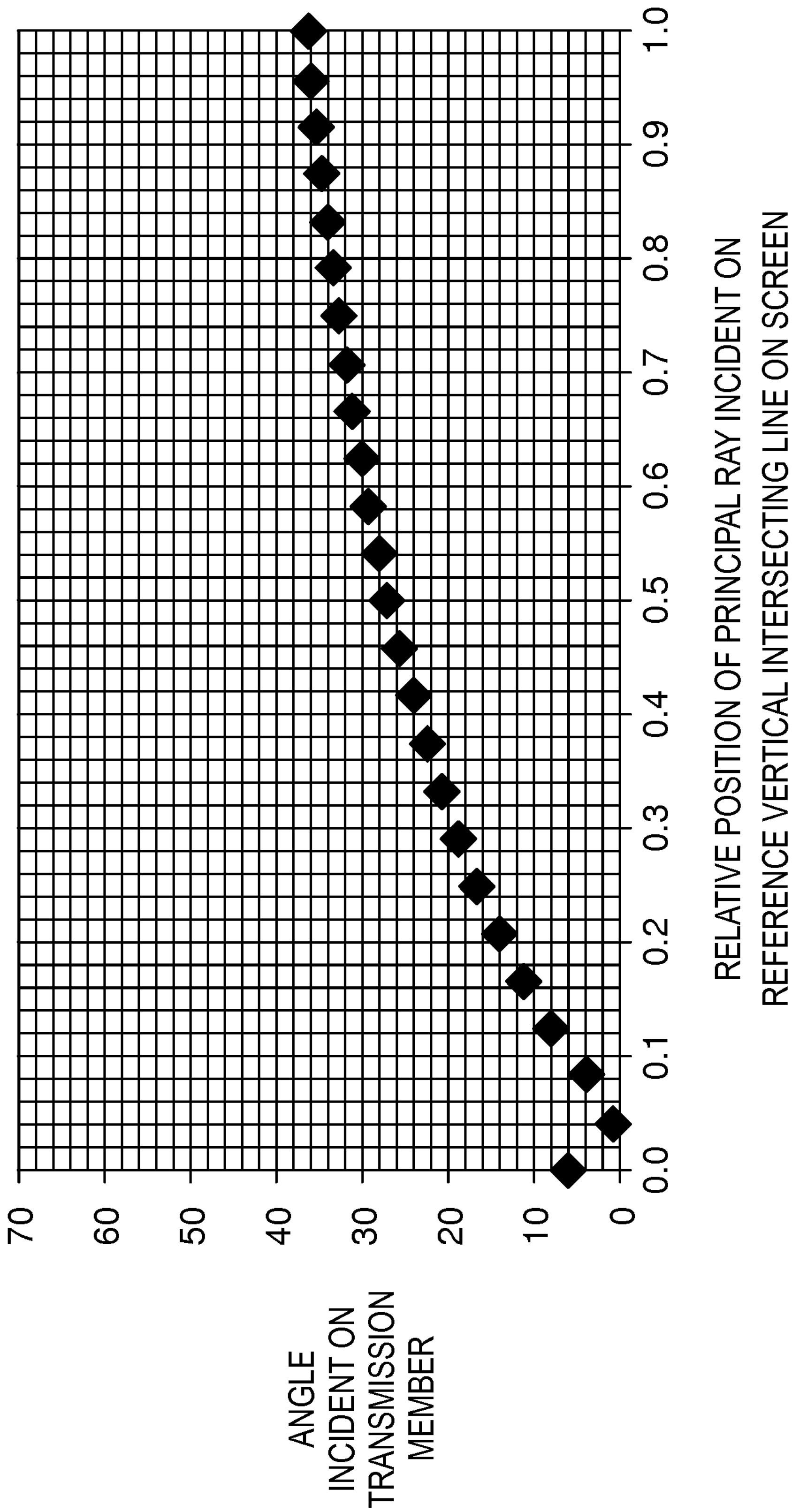
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 20

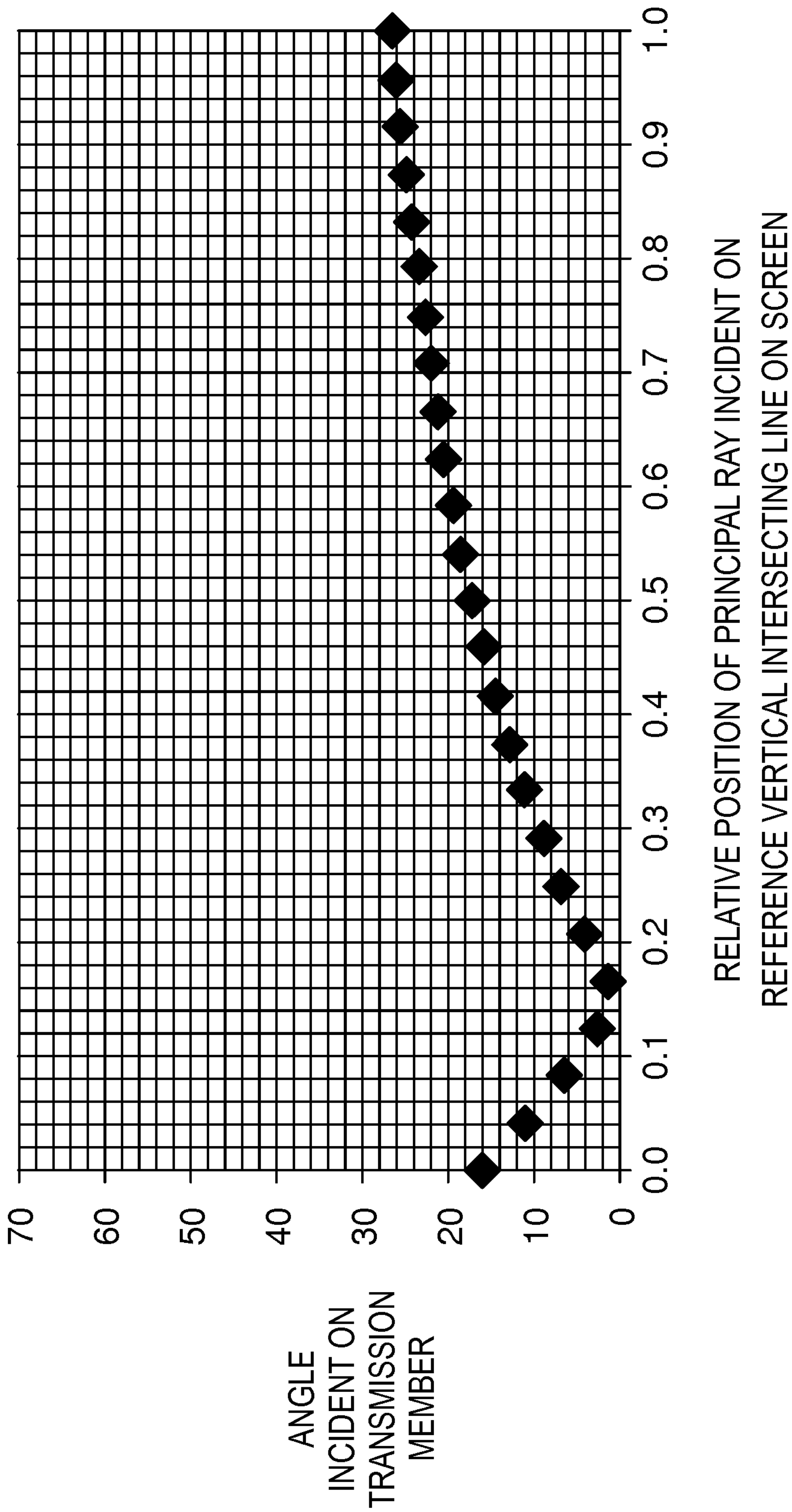
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 21

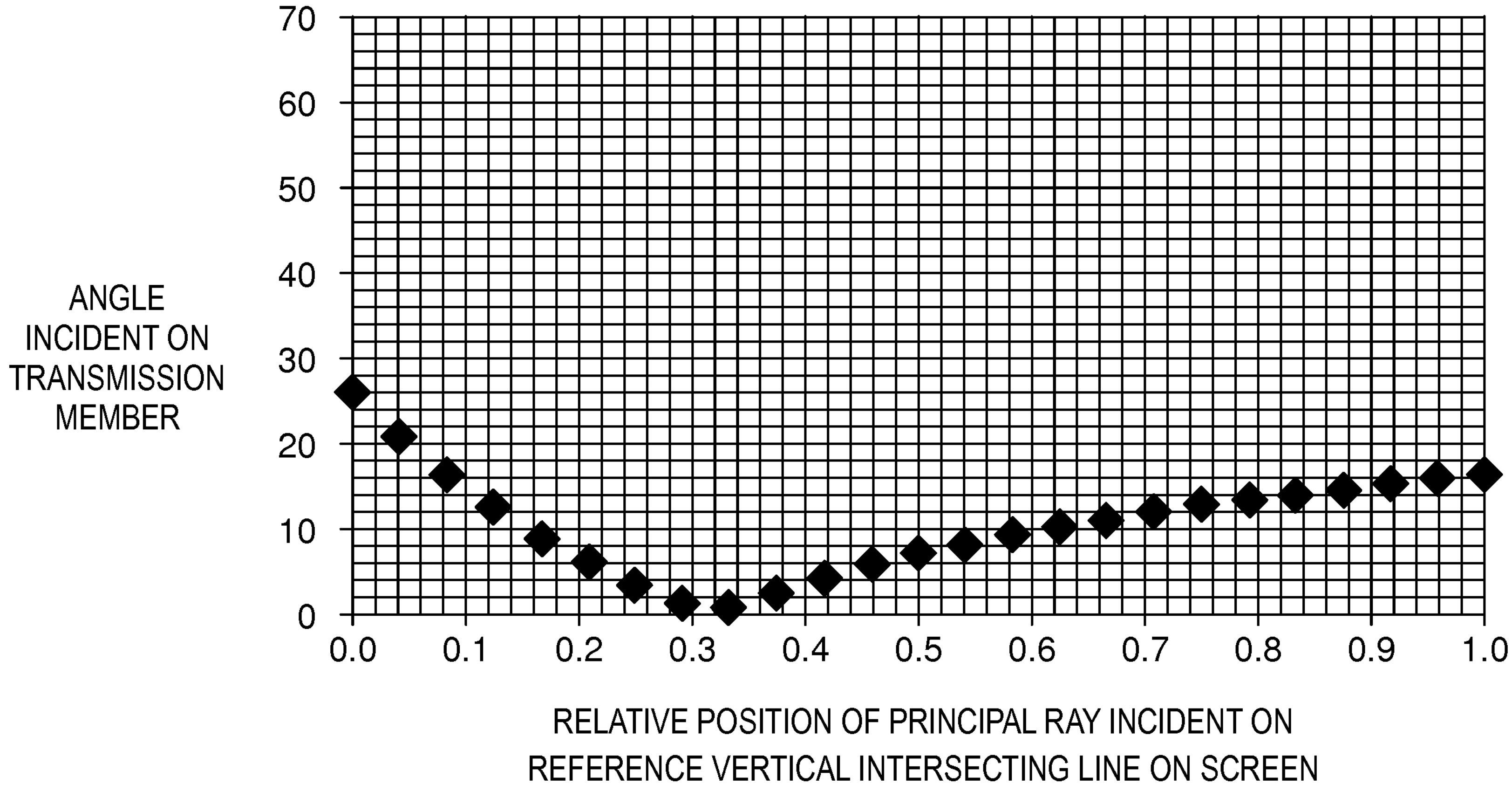
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 22

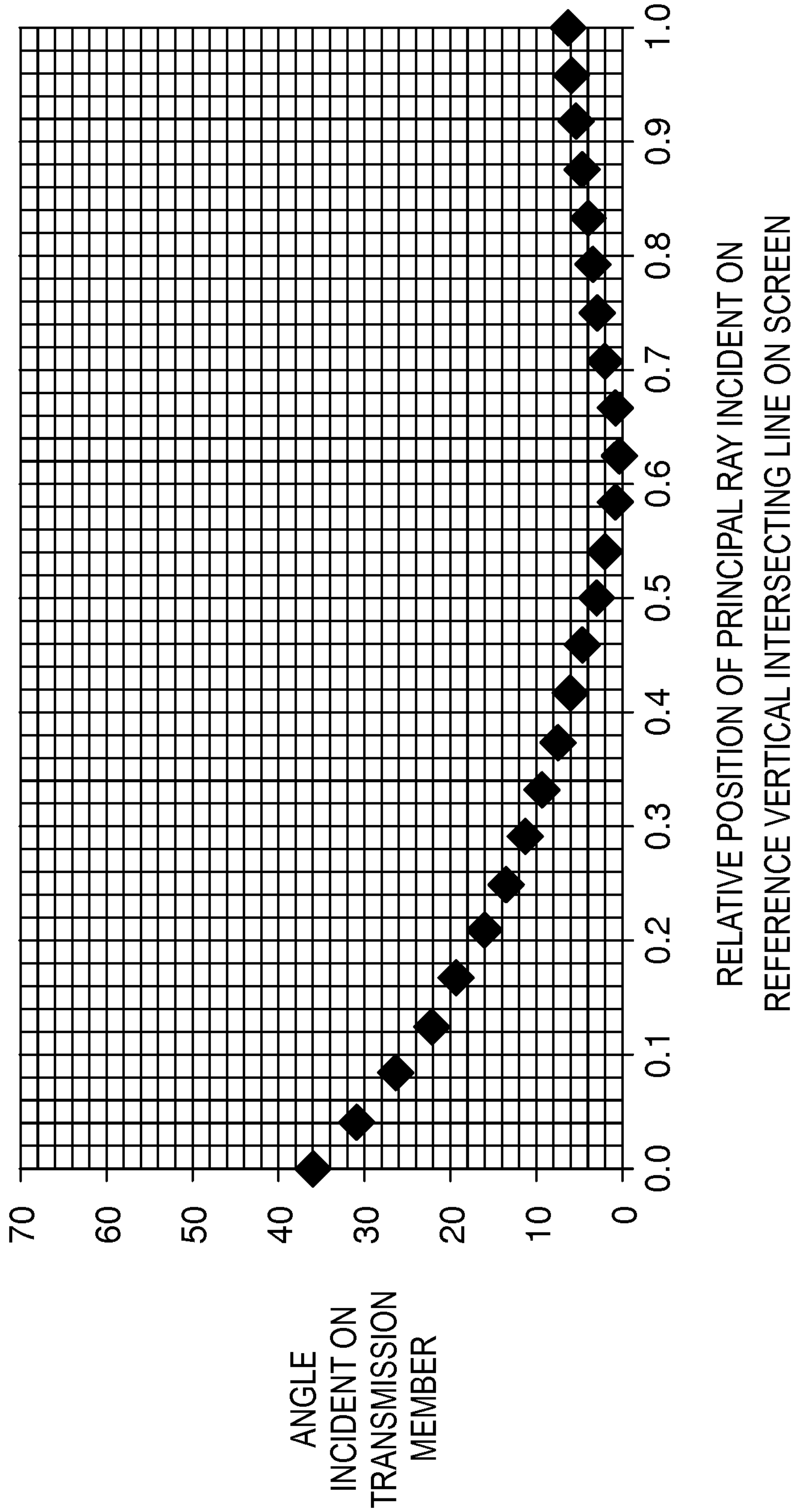
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 23

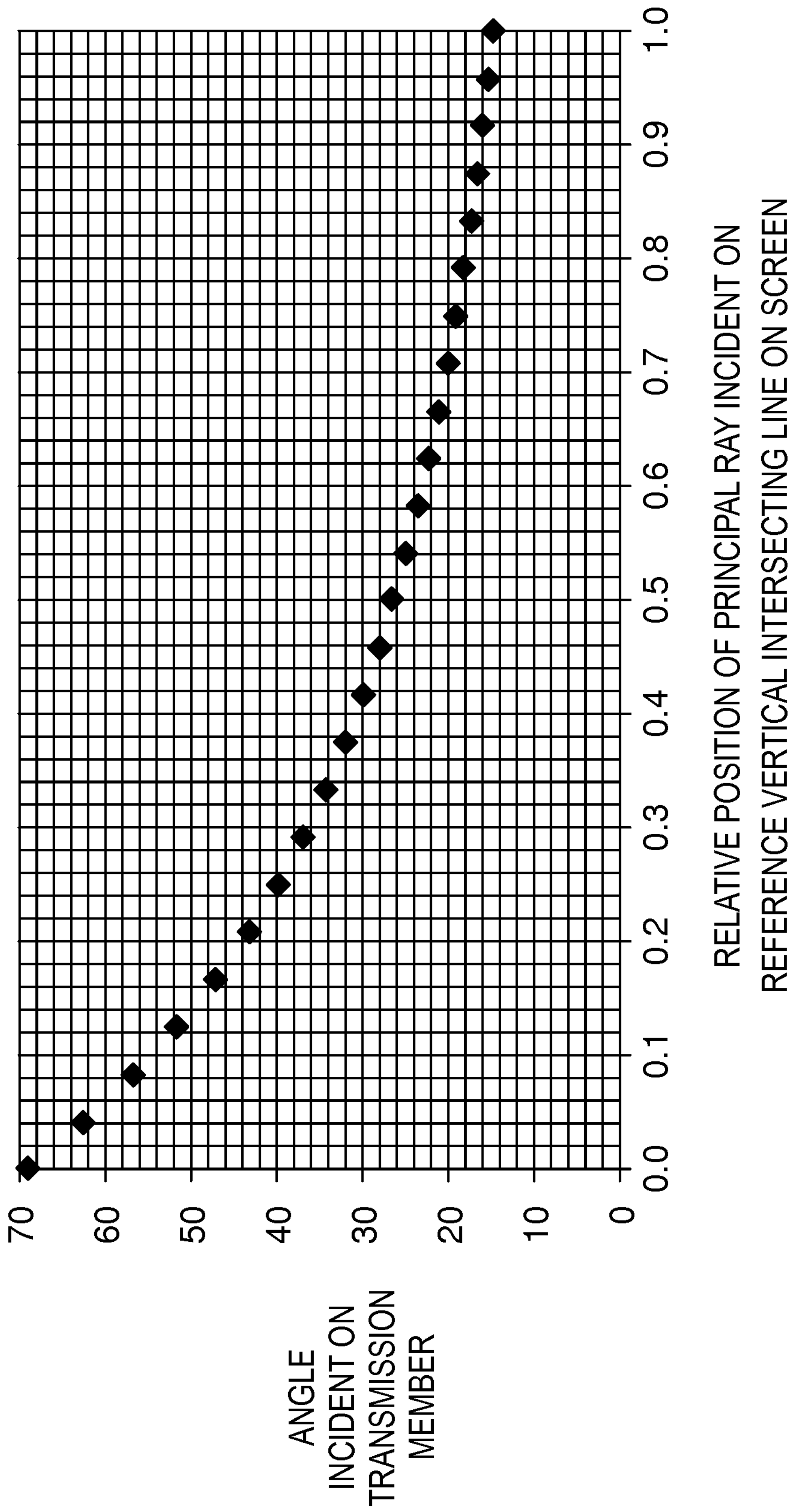
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 24

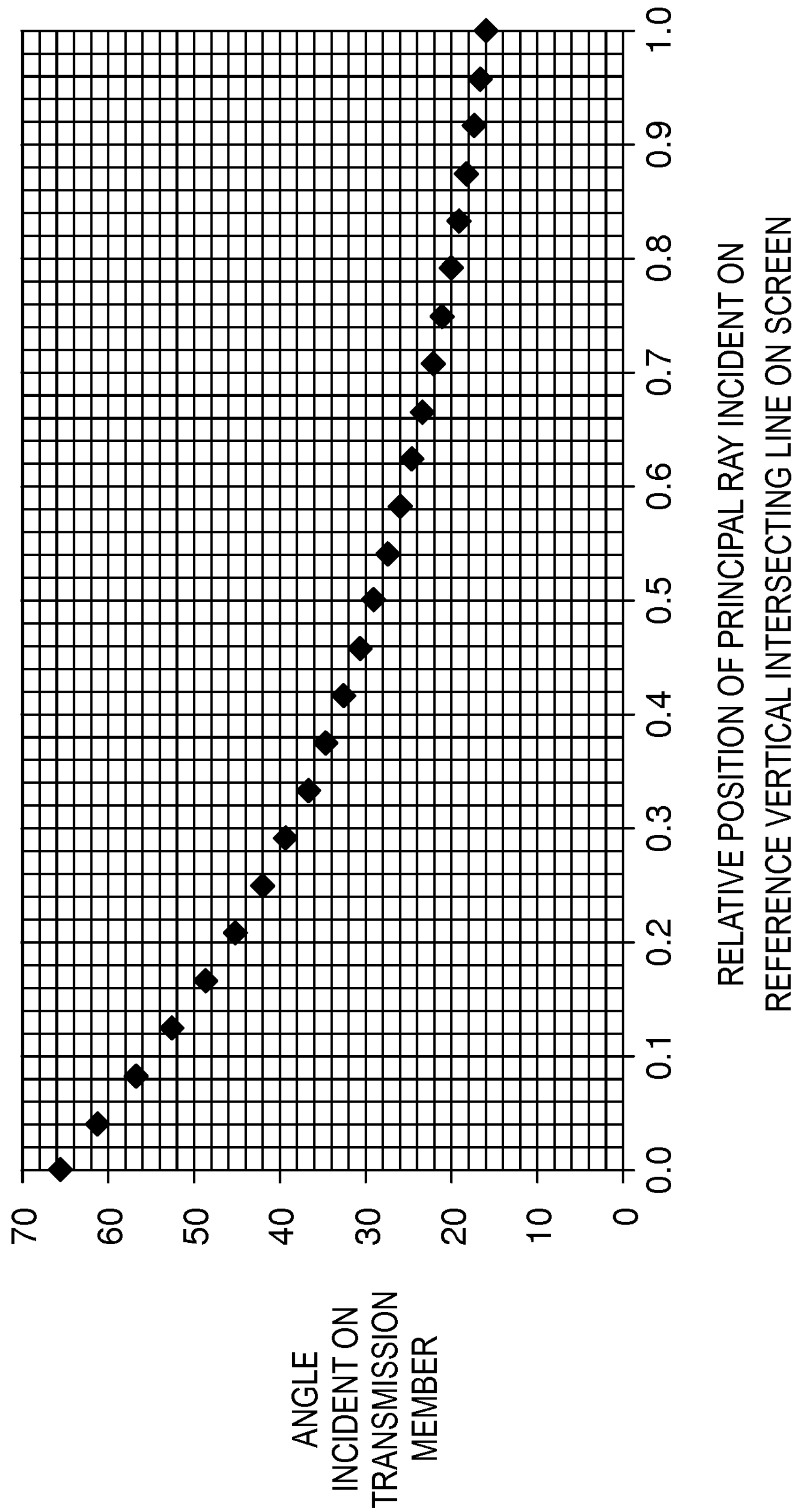
ANGLE
INCIDENT ON
TRANSMISSION
MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON
REFERENCE VERTICAL INTERSECTING LINE ON SCREEN

FIG. 25

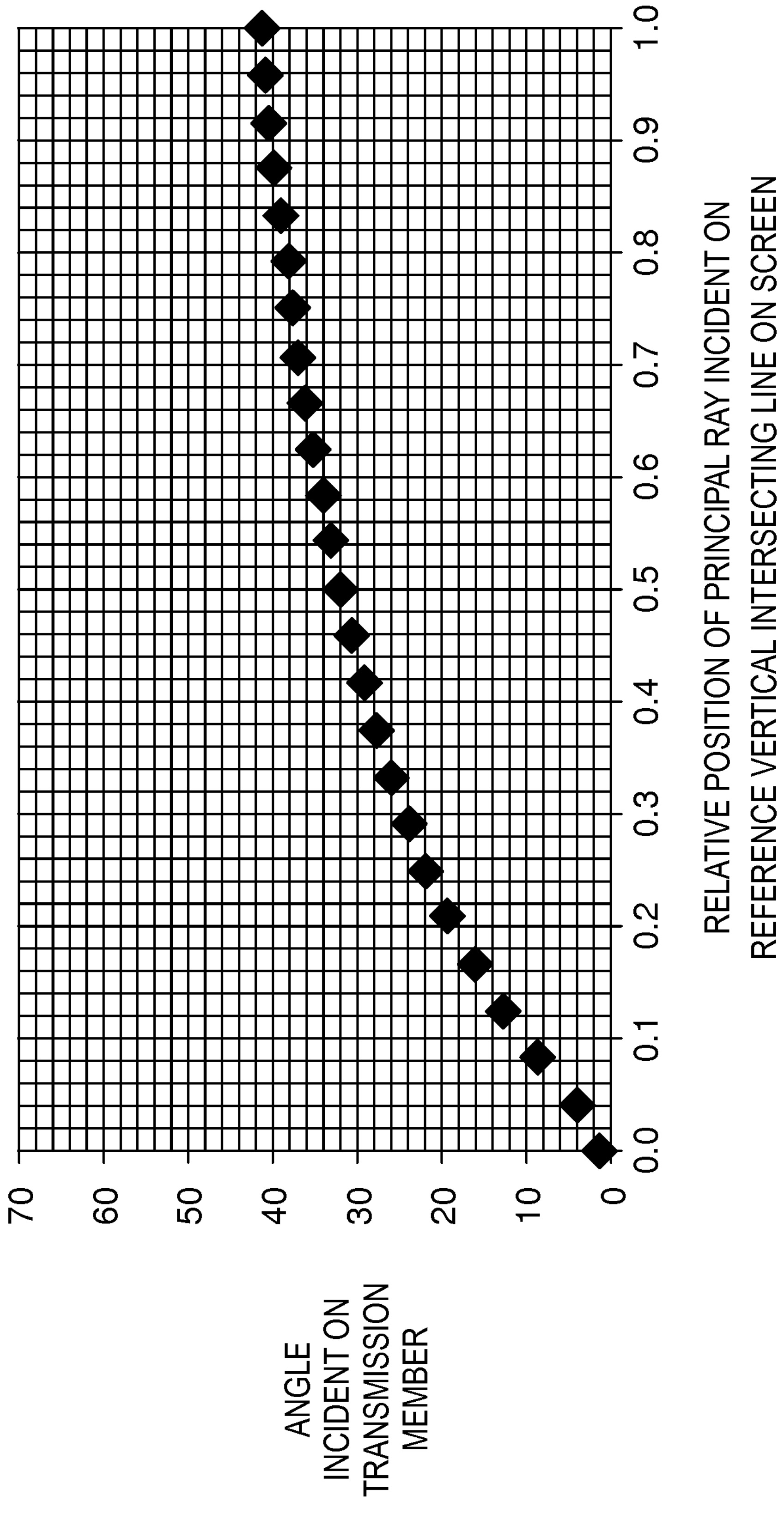
ANGLE INCIDENT ON TRANSMISSION MEMBER
0
10
20
30
40
50
60
70
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

FIG. 26

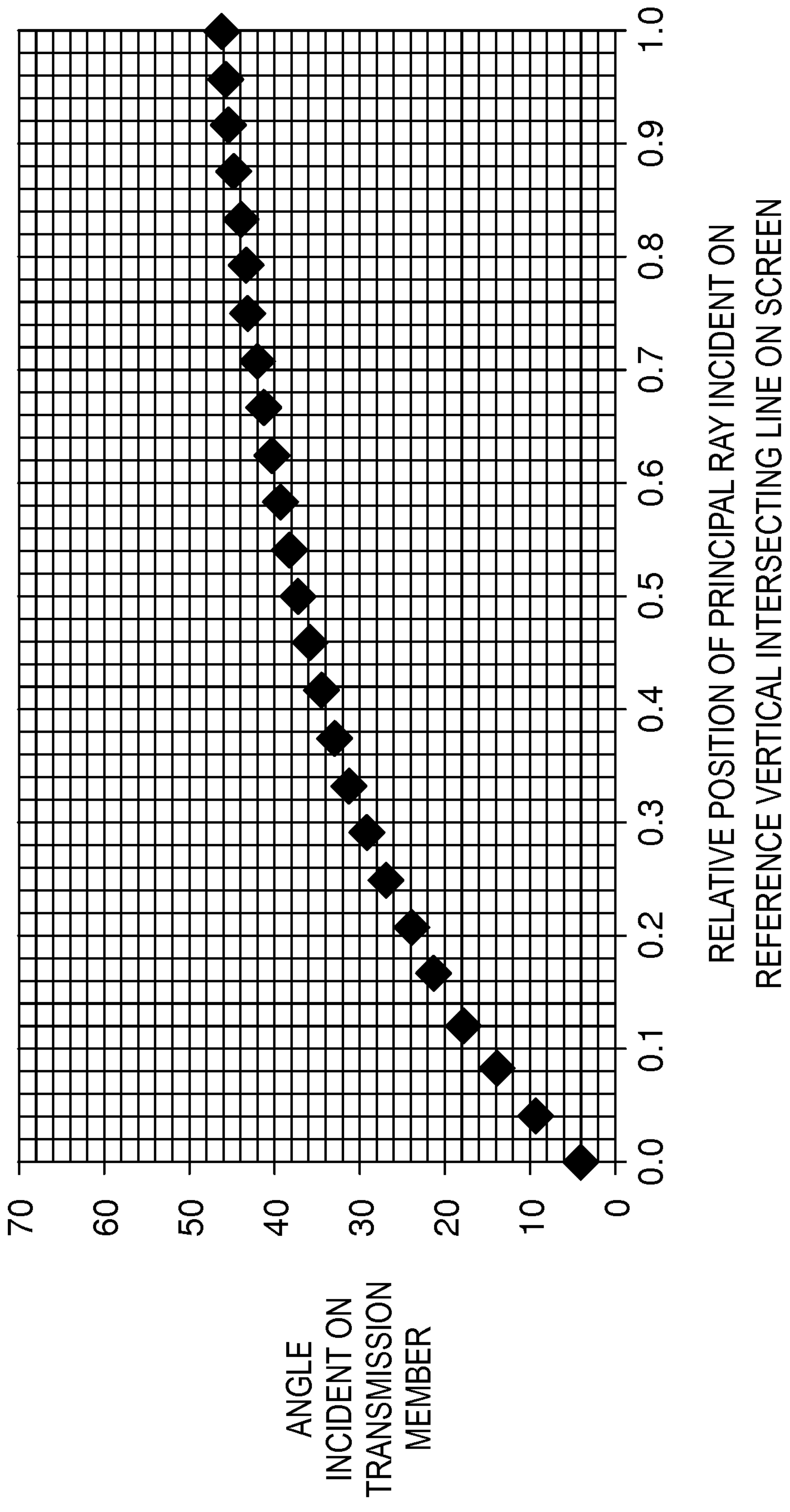
ANGLE INCIDENT ON TRANSMISSION MEMBER
70
60
50
40
30
20
10
0
0.0
0.1
0.2
0.3
0.4
0.5
0.6
0.7
0.8
0.9
1.0
RELATIVE POSITION OF PRINCIPAL RAY INCIDENT ON REFERENCE VERTICAL INTERSECTING LINE ON SCREEN

## INTERNATIONAL SEARCH REPORT

International application No.
PCT/JP2017/009130

A. CLASSIFICATION OF SUBJECT MATTER
*G02B17/08*(2006.01)i, *G02B13/16*(2006.01)i, *G02B13/18*(2006.01)i

According to International Patent Classification (IPC) or to both national classification and IPC

B. FIELDS SEARCHED

Minimum documentation searched (classification system followed by classification symbols)
G02B17/08, G02B13/16, G02B13/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-88727 A (Sanyo Electric Co., Ltd.), 13 May 2013 (13.05.2013), paragraphs [0023] to [0075]; fig. 1 to 10 & US 2013/0100418 A1 paragraphs [0023] to [0078]; fig. 1 to 10 & CN 103064240 A | 1-5 |
| A | JP 2010-152264 A (Seiko Epson Corp.), 08 July 2010 (08.07.2010), paragraphs [0019] to [0059]; fig. 1 to 5 & US 2010/0165308 A1 paragraphs [0065] to [0145]; fig. 15 to 19 & US 2013/0215400 A1 & CN 101770146 A | 1-5 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 29 May 2017 (29.05.17) | 06 June 2017 (06.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013174886 A